# EUROPÄISCHE PATENTSCHRIFT

(11) **EP 4 616 508 B1**
(45) Veröffentlichungstag und Bekanntmachung des Hinweises auf die Patenterteilung: **30.09.2026**
(21) Anmeldenummer: 23800478.2
(22) Anmeldetag: 07.11.2023
(51) Int. Cl.: H02J 1/10, H02J 3/38

(54) **INVERTER SYSTEM UND VERFAHREN ZUM BETREIBEN DIESES INVERTER SYSTEMS**
INVERTER SYSTEM AND METHOD FOR OPERATING THE INVERTER SYSTEM
SYSTÈME D'ONDULEUR ET PROCÉDÉ DE FONCTIONNEMENT DU SYSTÈME D'ONDULEUR

(30) Priorität: 07.11.2022 EP 22205834
(43) Veröffentlichungstag der Anmeldung: 17.09.2025
(73) Patentinhaber: FRONIUS INTERNATIONAL GmbH, 4643 Pettenbach (AT)
(72) Erfinder: GRAF, Johannes, 4643 Pettenbach (AT); RECHBERGER, Philipp, 4643 Pettenbach (AT)
(74) Vertreter: Weiss Patentanwalts GmbH
(86) Internationale Anmeldenummer: PCT/EP2023/081009
(87) Internationale Veröffentlichungsnummer: WO 2024/100048

(56) Entgegenhaltungen:
- US-A1- 2004 125 618
- US-A1- 2016 197 481
- US-A1- 2017 047 739
- US-A1- 2022 166 225
- US-A1- 2022 181 978
- FURUSHO YASUAKI ET AL: "1MW Power Conditioning System with Multiple DC Inputs for PVs and Batteries", 2018 INTERNATIONAL POWER ELECTRONICS CONFERENCE (IPEC-NIIGATA 2018 -ECCE ASIA), IEEJ INDUSTRY APPLICATION SOCIETY, 20 May 2018 (2018-05-20), pages 3711 - 3716, XP033428361, DOI: 10.23919/IPEC.2018.8507515

## Beschreibung

### Technisches Gebiet

Die gegenständliche Erfindung betrifft allgemein das Gebiet der Elektrotechnik, insbesondere den Bereich der Leistungselektronik und leistungselektronischer Schaltungen. Im Speziellen bezieht sich die vorliegende Erfindung auf ein Wechselrichtersystem für eine Photovoltaikanlage. Das Wechselrichtersystem weist dabei ein Wechselrichtereinheit auf, welcher über einen Zwischenkreis eine vorgegebene Anzahl an Gleichspannungswandlern vorgeschaltet ist. Dabei werden die DC-Eingänge des Wechselrichtersystems von den Gleichspannungswandlern gebildet, welche eine Anzahl und Eigenschaften der DC-Eingänge vorgeben. Die DC-Eingänge sind mit unterschiedlichen Gleichspannungseinheiten, insbesondere PV-Einheiten, Energiespeichereinheiten, etc., verbindbar. Weiterhin bezieht sich die gegenständliche Erfindung auch auf ein zugehöriges Verfahren zum Betreiben des Wechselrichtersystems für die Photovoltaikanlage.

### Stand der Technik

Wechselrichter werden üblicherweise dort eingesetzt, wo eine Gleichspannung einer elektrischen Energiequelle, wie beispielsweise einer Photovoltaik- bzw. kurz PV-Einheit, einer Batterie, etc. in eine geeignete Wechselspannung umgewandelt wird, damit diese in ein Versorgungsnetz eingespeist oder auch direkt zur Versorgung von Verbrauchern verwendet werden kann. Üblicherweise verbindet ein Wechselrichter damit zumindest eine eingangs-seitige angebundene Energie erzeugende oder liefernde Gleichspannungsquelle mit einem ausgangsseitig angebundenen Wechselspannungsnetz. Im Fall eines bidirektionalen Wechselrichters kann beispielsweise auch ein Gleichspannungsverbraucher, wie z.B. eine zu ladende Batterie, etc., aus einer angeschlossenen Energiequelle (z.B. PV-Einheit) oder aus dem Versorgungsnetz geladen bzw. mit elektrischer Energie versorgt werden.

Wechselrichter bzw. Wechselrichtersysteme spielen heutzutage - als sogenannte Solarwechselrichter - bei der Erzeugung erneuerbarer Energie mittels Sonnenenergie eine wichtige Rolle. Für die Energieerzeugung mittels Sonnenenergie werden Photovoltaikanlagen oder kurz PV-Anlagen eingesetzt, welche elektrische Energie aus Licht, insbesondere Sonnenlicht, erzeugen. Bei einer Photovoltaikanlage werden üblicherweise photovoltaische Zellen eingesetzt, welche meist zu größeren Photovoltaikeinheiten oder kurz PV-Einheiten, wie z.B. PV-Modulen oder PV-Strängen, welche auch entsprechend verschalteten PV-Modulen bestehen, zusammengefasst werden. PV-Einheiten erzeugen als Gleichspannungsquellen aus Sonnenenergie bzw. Sonnenlicht elektrische Energie in Form von Gleichspannung bzw. Gleichstrom. Für die Einspeisung der erzeugten Gleichspannung in ein Versorgungsnetz bzw. um diese für Verbraucher nutzbar zu machen, werden die PV-Einheiten an Gleichspannungs- oder DC-Eingänge von Wechselrichtern bzw. Wechselrichtersysteme angebunden, welche die in den PV-Einheiten erzeugte Gleichspannung in eine geeignete Wechselspannung umwandeln. Ein Wechselrichter bzw. ein Wechselrichter-system ist somit ein wesentlicher Teil einer PV-Anlage.

In PV-Anlagen eingesetzte Wechselrichtersysteme weisen ausgangsseitig üblicherweise einen z.B. ein- oder dreiphasiger Wechselrichtereinheit, meist einen DC-AC-Wandler, auf. Der DC-AC-Wandler wandelt die von der zumindest einen an das Wechselrichtersystem angeschlossenen PV-Einheit erzeugte Gleichspannung in eine geeignete Wechselspannung um, damit diese in das Versorgungsnetz eingespeist werden kann. Weiterhin kann sich die Wechselrichtereinheit bzw. der DC-AC-Wandler z.B. automatisch mit dem Versorgungsnetz synchronisieren.

Auf einer Eingangsseite des Wechselrichtersystems sind - je nachdem, ob nur eine PV-Einheit oder mehrere PV-Einheiten und gegebenenfalls noch eine andere, weitere Gleichspannungseinheit (z.B. stationäre Batterie) angebunden werden soll - ein oder mehrere Gleichspannungswandler oder DC-DC-Wandler vorgesehen. Ein Gleichspannungs-wandler bezeichnet eine elektrische Schaltung, welche eine am Eingang zugeführte Gleichspannung (z.B. Ausgangsspannung einer PV-Einheit, Gleichspannung aus einer Batterie, etc.) in eine Ausgangsspannung mit höherem, gleichem oder niedrigerem Spannungsniveau umwandelt. Das Spannungsniveau der Ausgangsspannung des Gleichspannungswandler kann z.B. vorgegeben sein - beispielsweise durch eine vom DC-AC-Wandler des Wechselrichtersystems mindestens benötigte Eingangsspannung.

Durch die eingangsseitige Anordnung der Gleichspannungswandler im Wechselrichter-system bilden die Eingänge der Gleichspannungswandler auch die DC-Eingänge des Wechselrichtersystems. D.h. eine Anzahl der eingangsseitigen Gleichspannungswandler gibt eine Anzahl der DC-Eingänge des Wechselrichtersystems vor. Weiterhin definieren eine Dimensionierung und Auslegung der jeweils verwendeten Gleichspannungswandlers auch die Eigenschaften bzw. Eingangsparameter des jeweiligen DC-Eingangs. D.h. durch die Auslegung des jeweiligen Gleichspannungswandlers wird beispielsweise ein Spannungs-bereich, eine maximale Stromstärke, eine maximale Leistung des jeweiligen DC-Eingangs festgelegt sowie vorgegeben, ob der DC-Eingang z.B. unidirektional oder bidirektional nutzbar ist.

Gleichspannungswandler weisen weiterhin eine große Variationsmöglichkeit ihres Spannungsübertragungsverhältnisses auf. Dadurch kann ein Arbeitspunkt der jeweils angebundenen PV-Einheiten, bei welchem möglichst viel Energie abgegeben wird, in weiten Grenzen (z.B. mittels sogenanntem Maximum-Power-Point-Tracking) variiert bzw. an Gegebenheiten wie z.B. Sonneneinstrahlung, Temperatur, Abschattungseffekte, etc. optimal angepasst werden. Bei Solarwechselrichtersystemen werden daher meist als DC-Eingänge Gleichspannungswandler eingesetzt, welche als Hochsetzsteller bzw. Boost-Konverter oder Hoch-Tiefsetzsteller bzw. Buck-Boost-Konverter ausgestaltet sind. Diese können auch wegen ihrer Hochsetz-Funktion - d.h. eine Eingangsspannung kann in eine Ausgangs-spannung mit höherem Spannungsniveau umgewandelt werden - auch als Booster bezeichnet werden. Dadurch kann beispielsweise auch noch bei einer geringen Ausgangsspannung einer PV-Einheit ins Versorgungsnetz eingespeist werden.

Zwischen dem einen oder den mehreren eingangsseitigen Gleichspannungswandlern und der ausgangsseitigen Wechselrichtereinheit bzw. DC-AC-Wandler ist üblicherweise ein Zwischenkreis vorgesehen. Der Zwischenkreis wird meist von einer Kapazität gebildet und wird von den einen bzw. mehreren eingangsseitigen Gleichspannungswandlern gespeist. Weiterhin liefert der Zwischenkreis die Eingangsspannung für den ausgangsseitigen Wechselrichtereinheit bzw. DC-AC-Wandler des Wechselrichtersystems.

An ein Wechselrichtersystem können allerdings neben einer oder mehreren PV-Einheiten, auch andere Gleichspannungsquellen oder Gleichspannungssenken bzw. -verbraucher angebunden sein. So kann beispielsweise eine stationärer Energiespeichereinheit (z.B. Batterie) an das Wechselrichtersystem angeschlossen werden. Die Energiespeichereinheit kann beispielsweise mit überschüssiger, von den PV-Einheiten erzeugter Energie geladen werden, welche z.B. für eine Optimierung des Selbstverbrauchs im Einspeisebetrieb und/oder für eine Energielieferung in Zeiten mit geringer bzw. keiner Sonneneinstrahlung (z.B. nachts, bei Schlechtwetter, etc.) genutzt werden kann. Weiterhin ist es auch denkbar, dass andere Gleichspannungsquellen, wie z.B. ein DC-Generator, als Back-Up bei geringer oder fehlender Sonneneinstrahlung durch Anbindung an das Wechselrichtersystem in die PV-Anlage integriert werden. Weiters ist es auch möglich, noch Gleichspannungssenken bzw. - verbraucher, wie z.B. eine Gleichstrom-Ladevorrichtung für ein E-Auto, eine gleichspannungsbetriebene Heizeinheit, etc. über das Wechselrichtersystem in die PV-Anlage zu integrieren. In der Folge werden alle an ein Wechselrichtersystem anbindbaren Gleichspannungsquellen (z.B. Energiespeichereinheiten, Batterien, etc.) sowie PV-Einheiten und Gleichspannungssenken bzw. -verbraucher unter dem Begriff "Gleichspannungseinheit" bzw. "Gleichspannungseinheiten" zusammengefasst.

Sollen beispielsweise mehrere verschiedene Gleichspannungseinheiten - z.B. mehrere, beispielsweise unterschiedlich ausgerichtete PV-Einheiten, Energiespeichereinheiten, Verbraucher, DC-Generatoren, etc. - an die DC-Eingänge eines Wechselrichtersystems angebunden werden, so ist bei der Planung und Installation der PV-Anlage zu berücksichtigen, dass die Gleichspannungseinheiten jeweils unterschiedliche Eigenschaften und Leistungsparameter aufweisen. So liefern z.B. Gleichspannungsquellen (z.B. PV-Einheiten, DC-Generator) nur elektrische Energie bzw. Leistung an das Wechselrichtersystem, während Gleichspannungssenken bzw. -verbraucher nur elektrische Energie bzw. Leistung über das Wechselrichtersystem von einer der angebundenen Gleichspannungsquellen und/oder aus dem angebundenen Energieversorgungsnetz beziehen. D.h., die Gleichspannungswandler, an welche z.B. Gleichspannungsquellen angeschlossen sind, müssen z.B. als Gleichspannungssenken und die Leistung z.B. von der Gleichspannungsquelle zur Wechselrichtereinheit übertragen. Gleichspannungswandler, an welche Gleichspannungssenken angeschlossen sind, müssen z.B. als Gleichspannungsquellen fungieren bzw. die Leistung in eine andere Richtung übertragen als Gleichspannungswandler, die als Gleichspannungssenken fungieren. Ist beispielsweise eine Energiespeichereinheit (z.B. stationäre Batterie) in die PV-Anlage integriert, so ist zu berücksichtigen, dass das der entsprechend DC-Eingang des Wechselrichtersystems bzw. der zugehörige Gleichspannungswandler bidirektional ausgestaltet ist, um die Energiespeichereinheit laden und bei Bedarf entladen zu können. Weiterhin sind auch die unterschiedlichen Leistungsparameter der anzubindenden Gleichspannungseinheiten - wie z.B. gelieferter und/oder bezogene Leistung, Spannung und/oder Stromstärke zu berücksichtigen. Dabei können sich die Leistungsparameter einzelner Gleichspannungseinheiten auch verändern. Die von einer PV-Einheit gelieferte Leistung bzw. Ausgangsspannung kann beispielsweise in Abhängigkeit von Sonneneinstrahlung, Temperatur, Witterungsverhältnissen, etc. schwanken. Bei Energiespeichereinheiten sind z.B. ein jeweiliger Lade-/Entladestrom bzw. eine jeweilige Lade-/Entladespannung, Ladestatus (State-of-Charge bzw. SoC), Entladestatus (Depth-of-Decharge bzw. DoD), etc. zu berücksichtigen. Weiterhin kann es auch vorkommen, dass nicht jede Gleichspannungseinheit dauerhaft mit dem Wechselrichtersystem verbunden sein muss. So kann z.B. eine aufgeladene Energiespeichereinheit oder ein Back-Up-DC-Generator weggeschaltet werden. Auch unterschiedlich ausgerichtete PV-Einheiten können z.B. je nach aktueller Sonneneinstrahlung und damit gelieferter Leistung bzw. Ausgangsspannung eine unterschiedliche Anzahl bzw. unterschiedlich ausgelegte DC-Eingänge des Wechselrichtersystems benötigen.

Soll nun eine Vielzahl unterschiedlicher Gleichspannungseinheiten mit unterschiedlichen Eigenschaften und teilweise veränderlichen Leistungsparametern in einer PV-Anlage vorgesehen sein, so ergibt sich dadurch eine meist komplexe Planung und aufwendige Installation der Anlage. Dabei muss beispielsweise genau berücksichtigt werden, welcher DC-Eingang des Wechselrichtersystems zum Anschließen der jeweiligen Gleichspannungseinheit geeignet ist. D.h., der jeweilige DC-Eingang muss die für die anzuschließende Gleichspannungseinheit passenden Eigenschaften - wie z.B. zulässigen Spannungsbereich, maximal zulässige Stromstärke, maximal zulässige Leistung, Übertragungsrichtung der Leistung bzw. Uni- oder Bi-Direktionalität, etc. - aufweisen, um einen störungsfreien und effizienten Betrieb dieser Gleichspannungseinheit sowie der gesamten PV-Anlagen zu ermöglichen.

Eine Möglichkeit unterschiedliche Gleichspannungseinheiten bzw. deren unterschiedliche Eigenschaften in einer PV-Anlage zu berücksichtigen, besteht beispielsweise darin mehrere unterschiedlich ausgelegte bzw. dimensionierte Wechselrichtersysteme vorzusehen. Diese können beispielsweise eine unterschiedliche Anzahl an DC-Eingängen aufweisen, welche speziell an die Eigenschaften der jeweils anzuschließenden Gleichspannungseinheiten angepasst sind. D.h., schlimmstenfalls muss für jeden Typ der anzuschließenden Gleichspannungseinheitseinheiten zumindest ein eigenes Wechselrichtersystem vorgesehen werden. Dadurch weist die PV-Anlage nicht nur hohe Kosten und viele Komponenten auf, sondern ist auch sehr aufwendig zu installieren. Weiterhin kann es nachteilig sein, dass die Anzahl der DC-Eingänge des verwendeten Wechselrichtersystems nicht optimal genutzt wird. So können beispielweise für einen Typ der anzuschließenden Gleichspannungseinheiten zumindest temporär zu wenig DC-Eingänge vorhanden sein, während andere DC-Eingänge kaum oder überhaupt nicht genutzt werden.

Eine andere Möglichkeit unterschiedliche Typen von Gleichspannungseinheiten mit unterschiedlichen Eigenschaften in eine PV-Anlage zu integrieren, wäre beispielsweise ein Wechselrichtersystem mit entsprechend groß dimensionierten Gleichspannungswandlern einzusetzen. D.h., im Wechselrichtersystem sind z.B. als DC-Eingänge Gleichspannungswandler eingesetzt, welche für einen entsprechend großen Spannungsbereich, eine entsprechend große maximale Stromstärke und/oder Leistung dimensioniert und idealerweise bidirektional ausgestaltet sind, sodass möglichst viele unterschiedliche Gleichspannungseinheiten an diese DC-Eingänge angeschlossen werden können. Diese Vorgehensweise weist allerdings den Nachteil auf, dass die DC-Eingänge des Wechselrichtersystems beispielweise für manche Gleichspannungseinheiten überdimensioniert sein können. Dies kann zu einer relativ ineffizienten Nutzung des Wechselrichtersystems führen. Weiterhin weist ein Wechselrichtersystem mit entsprechend groß dimensionierten Gleichspannungswandlern eine entsprechende Baugröße und ein entsprechendes Gewicht auf und kann sowohl in der Herstellung als auch in der Anschaffung hohe Kosten aufweisen.

Die US 2016/0197481 A1 zeigt beispielsweise eine Vorrichtung sowie ein Verfahren zum Bestimmen eines Typs einer Stromversorgungsvorrichtung, wie z.B., PV-Anlage, Batteriespeichers, Brennstoffzelle, etc., der an diese Vorrichtung angeschlossen sind. Dabei wird eine Ausgangsspannung der jeweils an die Vorrichtung angeschlossenen Stromversorgungsvorrichtungen von DC/DC-Wandlern nach einem vorgegebenen Übersetzungsverhältnis umgewandelt und die vom jeweiligen DC/DC-Wandler gelieferte Ausgangsspannung gemessen, um die jeweils angeschlossene Stromversorgungsvorrichtung zu bestimmen.

Aus der US 2004/125618 A1 und der US 2017/047739 A1 sind z.B. ebenfalls Wechselrichtersysteme bekannt, an welche mehrere Energiequellen, wie z.B. PV-Module, Batterie, etc. angeschlossen werden können. Ebenso zeigt z.B. Furusho Yasuaki, et al., "1MW Power Conditioning System with Multiple DC Inputs for PVs and Batteries", 2018 International Power Electronics conference (IPEC-NIIGATA 2018 - ECCE ASIA, IEEJ Industry Application Society, 20. Mai 2018, Seite 3711-3716*"* ein Wechselrichtersystem, an das PV-Module und eine Batterie angeschlossen werden können, wobei über Schalter eines PV-DC Boards die PV-Module mit einem ersten Gleichspannungswandler und die Batterie mit einem zweiten Gleichspannungswandler verbunden werden können.

Aus der US 2022/0166225 A1 ist ein tragbares Energiemanagementsystem mit mehreren konfigurierbaren Geräteanschlüssen bekannt, bei dem an jeden Geräteanschluss ein externes Gerät, wie z.B. eine ladbare Batterie, ein tragbare Stromversorgung, etc., angeschlossen und jeder Geräteanschluss entweder direkt oder über einen Leistungswandler mit dem Energiebus verbunden werden kann.

Weiterhin zeigt die US 2022/0181978 A1 ein Leistungsmanagementsystem mit drei Geräteanschlüssen und einem Einweg-DC-DC-Wandler in einem Schaltkreis, der mittels eines digitalen Datenprozessors umkonfiguriert werden kann, indem dieser die Anschlüsse abgefragt, ob und welches Gerät angeschlossen ist, um dann eine Anbindung des Gerät - entweder direkt oder über einen rekonfigurierbaren Stromkanal - sowie eine Betriebsspannung auszuwählen.

### Darstellung der Erfindung

Der Erfindung liegt daher die Aufgabe zugrunde, ein Wechselrichtersystem für eine Photovoltaikanlage sowie ein zugehöriges Verfahren zum Betreiben des Wechselrichtersystems anzugeben, mit welchen eine vorgegebene Anzahl an DC-Eingängen mit von im Wechselrichtersystem verwendeten Gleichspannungswandlern vorgegebenen Eigenschaften zeitlich variabel und flexibel für unterschiedliche Gleichspannungseinheiten effizient genutzt werden.

Diese Aufgabe wird durch Verfahren zum Betreiben eines Wechselrichtersystem sowie durch ein zugehöriges Wechselrichtersystem gemäß den unabhängigen Ansprüchen gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren zum Betreiben eines Wechselrichtersystems für eine Photovoltaikanlage mit einer Wechselrichtereinheit, welcher über einen Zwischenkreis eine vorgegebene Anzahl an Gleichspannungswandler vorgeschaltet ist. Von den Gleichspannungswandlern werden DC-Eingänge des Wechselrichtersystems gebildet und eine Anzahl sowie Eigenschaften der DC-Eingänge vorgegeben, wobei die DC-Eingänge mit unterschiedlichen Gleichspannungseinheiten (z.B. PV-Einheiten, Energiespeichereinheiten, etc.) verbunden werden, wobei mit den DC-Eingängen eine Schalteinheit verbunden wird, welche Eingänge zum Anschließen von Gleichspannungseinheiten aufweist. An diese Eingänge der Schalteinheit werden die unterschiedlichen Gleichspannungseinheiten angeschlossen, wobei die Schalteinheit zwischen den die DC-Eingänge des Wechselrichtersystems bildenden Gleichspannungswandlern und den anschließbaren Gleichspannungseinheiten angeordnet wird. Dann werden die an den Eingängen der Schalteinheit angeschlossenen, unterschiedlichen Gleichspannungseinheiten identifiziert. Dazu wird für jede an einem Eingang der Schalteinheit angeschlossene Gleichspannungseinheit ein aktueller Wert zumindest einer Leistungsgröße ermittelt. Der ermittelte, aktuelle Wert der zumindest einen Leistungsgröße wird dann mit zumindest einem vorgegebenen Schwellwert verglichen. Von der Schalteinheit wird dann in Abhängigkeit von einem jeweiligen Vergleichsergebnis für die jeweils angeschlossene Gleichspannungseinheit zumindest ein passender DC-Eingang, welcher für die jeweils angeschlossene Gleichspannungseinheit passende Eigenschaften, zumindest umfassend einen zulässigen Spannungsbereich, eine maximal zulässige Stromstärke, eine maximal zulässige Leistung und/oder eine Leistungsübertragungsrichtung, aufweist, ermittelt, und dann eine Verbindung zwischen der jeweils angeschlossenen Gleichspannungseinheit und dem zumindest einen ermittelten passenden DC-Eingang hergestellt und/oder einen bestehende Verbindung mit einem passenden DC-Eingang entsprechend angepasst.

Der Hauptaspekt der vorgeschlagenen Lösung besteht darin, dass eine vorgegebene Anzahl an DC-Eingängen des Wechselrichtersystems, welche aufgrund der eingesetzten Gleichspannungswandler vorgegebene Eigenschaften - wie z.B. zulässiger Spannungsbereich, maximal zulässige Stromstärke und/oder Leistung, etc. - aufweisen können, zeitlich variabel verwendet werden kann. Weiterhin können durch das Verfahren die DC-Eingänge flexibel für unterschiedliche Gleichspannungseinheiten auf einfache und effiziente Weise genutzt werden. D.h., Gleichspannungseinheiten können idealerweise beliebig an die Eingänge der Schalteinheit angeschlossen werden und die Schalteinheit verbindet diese dann je nach Bedarf mit einem DC-Eingang, welcher die für die jeweilige Gleichspannungseinheit passende Eigenschaften aufweist. Der passende DC-Eingang für die jeweilige Gleichspannungseinheit wird auf Basis des jeweiligen ermittelten, aktuellen Werts der Leistungsgröße und durch Vergleich mit einem vorgegebenen Schwellwert (z.B. Strom-, Spannungs- und/oder Leistungsgrenzen) ermittelt. D.h., eine Verbindung zwischen der jeweils angeschlossenen Gleichspannungseinheit und zumindest einem passenden DC-Eingang des Wechselrichtersystems wird von der Schalteinheit in Abhängigkeit vom jeweiligen Vergleichsergebnis zugeordnet und hergestellt. Dabei ist es günstig, wenn als Leistungsgröße eine Eingangs- oder Ausgangsspannung, ein Eingangs- oder Ausgangsstrom und/oder eine Leistung der jeweils angeschlossenen Gleichspannungseinheit herangezogen wird.

Weiterhin werden durch das erfindungsgemäße Verfahren nur jene Gleichspannungseinheiten berücksichtigt, welche gerade "aktiv" sind bzw. Energie z.B. über das Wechselrichtersystem liefern oder beziehen. Gerade "inaktive" Gleichspannungseinheiten, wie z.B. eine aufgeladene Energiespeichereinheit, welcher gerade nicht benötigt wird, eine PV-Einheit z.B. nachts bzw. bei mangelnder Sonneneinstrahlung, etc., werden beim Herstellen der Verbindung nicht berücksichtigt oder es wird eine vorhandene Verbindung einer "inaktiven" Gleichspannungseinheit zu einem DC-Eingang aufgetrennt, um den DC-Eingang für eine andere "aktive" Gleichspannungseinheit nutzbar zu machen. D.h., das erfindungsgemäße Verfahren bietet idealerweise die Möglichkeit, dass von der Schalteinheit die Verbindungen zwischen den Gleichspannungseinheiten und den DC-Eingängen flexibel und bedarfsorientiert zugeordnet werden. Dazu können beispielsweise bestehende Verbindungen zwischen den Gleichspannungseinheiten und DC-Eingängen von der Schalteinheit in Abhängigkeit vom jeweiligen Vergleichsergebnis aufgetrennt oder durch andere Verbindungen ersetzt werden, welche die für die Gleichspannungseinheit benötigten Eigenschaften aufweisen. Weiterhin kann z.B. auch eine bestehende Verbindung in Abhängigkeit vom Vergleichsergebnis durch eine weitere Verbindung ergänzt werden.

Eine zweckmäßige Ausgestaltung des Verfahrens sieht vor, dass in vorgegebenen Zeitabständen neuerlich der aktuelle Wert der zumindest einen Leistungsgröße für jede der an den Eingängen der Schalteinheit angeschlossenen Gleichspannungseinheiten ermittelt wird. Damit kann auf einfache Weise, vor allem während des Betriebs des Wechselrichtersystems festgestellt werden, ob sich bei den Leistungsgrößen der angeschlossenen Gleichspannungseinheiten Veränderungen ergeben haben - d.h., ob beispielsweise eine PV-Einheit aufgrund veränderter Sonneneinstrahlung, Abschattung, etc. mehr, weniger oder kaum mehr Energie erzeugt oder ob z.B. bei einer Energiespeichereinheit eine Änderung des Lade- oder Entladezustands vorliegt, etc. Diese Änderungen können dann sehr einfach bei den Verbindungen zwischen den jeweils angeschlossenen Gleichspannungseinheiten und den passenden DC-Eingängen berücksichtigt werden.

Nach dem Anschließen der Gleichspannungseinheiten an die Eingänge der Schalteinheit kann idealerweise für eine Identifikation der jeweils angeschlossenen Gleichspannungseinheiten zumindest eine Kenngröße für jede der angeschlossenen Gleichspannungseinheiten eingegeben werden. Dabei kann beispielsweise die zumindest eine Kenngröße der jeweiligen Gleichspannungseinheit manuell eingegeben werden, wobei als Kenngröße z.B. bei Gleichspannungsquellen (z.B. PV-Einheit, etc.) eine Ausgangsspannung, ein maximaler Ausgangsstrom und/oder eine maximale Ausgangsleistung, bei Batterien eine Lade-/Entladespannung, ein maximaler Lade-/Entladestrom, ein Ladezustand, etc. oder bei Gleichspannungssenken (z.B. Verbraucher, etc.) eine Eingangsspannung, ein maximaler Eingangsstrom und/oder eine maximale Leistung verwendet werden kann.

Alternativ kann nach dem Anschließen der Gleichspannungseinheiten an die Eingänge der Schalteinheit zumindest eine Kenngröße von jeder der angeschlossenen Gleichspannungseinheiten für eine Identifikation der jeweils angeschlossenen Gleichspannungseinheiten automatisch ermittelt werden. Eine automatische Ermittlung der zumindest eine Kenngröße für jede angeschlossene Gleichspannungseinheit kann beispielsweise mittels Messung, mittels Scans einer Strom-Spannungskurve bzw. eines U-I-Scans oder z.B. durch Auslesen von Daten der angeschlossenen Gleichspannungseinheit über eine Datenverbindung (z.B. PLC, Modbus, etc.) erfolgen.

Idealerweise können den unterschiedlichen Gleichspannungseinheiten die Eingänge der Schalteinheit beliebig zugeordnet werden, an welche die Gleichspannungseinheiten angeschlossen werden. D.h. beim Anschließen der Gleichspannungseinheiten an die Schalteinheit ist es nicht notwendig darauf zu achten, an welchen Eingang der Schalteinheit welche Gleichspannungseinheit angeschlossen wird. Die Gleichspannungseinheiten können einfach nach Verfügbarkeit von Eingängen, Reihenfolge der Installation, etc. an die Schalteinheit angeschlossen werden.

Es ist auch günstig, wenn jeder angeschlossenen Gleichspannungseinheiten eine Priorität zugeordnet wird, welche bei einem Herstellen der Verbindung dem zumindest einen DC-Eingang berücksichtigt wird. Dadurch kann auf einfache Weise vorgegeben werden, welche angeschlossenen Gleichspannungseinheiten über die Schalteinheit bevorzugt mit den DC-Eingängen verbunden werden. Die Zuordnung dieser Priorität kann beispielsweise beim Anschließen und Identifizieren der Gleichspannungseinheiten erfolgen.

Die Lösung der angeführten Aufgabe erfolgt auch durch Wechselrichtersystem für eine Photovoltaikanlage, welches eine Wechselrichtereinheit aufweist. Der Wechselrichtereinheit ist über einen Zwischenkreis eine vorgegebene Anzahl von Gleichspannungswandler vorgeschaltet, wobei die Gleichspannungswandler die DC-Eingänge des Wechselrichtersystems bilden und eine Anzahl sowie Eigenschaften der DC-Eingänge vorgeben. Die DC-Eingänge sind mit unterschiedlichen Gleichspannungseinheiten (z.B. PV-Einheiten, Energiespeichereinheiten, etc.) verbindbar. Weiterhin weist das Wechselrichtersystem eine Schalteinheit auf, welche Eingänge zum Anschließen der unterschiedlichen Gleichspannungseinheiten und Ausgängen zum Verbinden mit den DC-Eingängen aufweist. Die Schalteinheit ist dabei zwischen den die DC-Eingänge bildenden Gleichspannungswandler des Wechselrichtersystems und den anschließbaren Gleichspannungseinheiten angeordnet. Weiterhin ist die Schalteinheit dazu ausgestaltet, einen aktuellen Wert zumindest einer Leistungsgröße für jede der an den Eingängen angeschlossenen Gleichspannungseinheiten zu ermitteln, den jeweils ermittelten, aktuellen Wert der zumindest einen Leistungsgröße der jeweils an den Eingängen angeschlossenen Gleichspannungseinheiten mit zumindest einem vorgegebenen Schwellwert zu vergleichen und in Abhängigkeit von einem jeweiligen Vergleichsergebnis für die jeweils an den Eingängen angeschlossenen Gleichspannungseinheiten zumindest einen passenden DC-Eingang, welcher für eine jeweils angeschlossene Gleichspannungseinheit passende Eigenschaften, zumindest umfassend einen zulässigen Spannungsbereich, eine maximal zulässige Stromstärke, eine maximal zulässige Leistung und/oder eine Leistungsübertragungsrichtung aufweist, zu ermitteln, und eine Verbindung der jeweils angeschlossenen Gleichspannungseinheiten mit dem zumindest einen ermittelten passenden DC-Eingang herzustellen und/oder eine bestehende Verbindung mit einem passenden DC-Eingang anzupassen.

Das Wechselrichtersystem ist damit insbesondere durch die Schalteinheit, welche als eigenständige Schalteinheit (mit z.B. eigenem Gehäuse), die zwischen die DC-Eingänge und die anzubindenden Gleichspannungseinheiten geschaltet ist, ausgeführt sein kann, oder in das Wechselrichtersystem integriert sein kann (d.h. mit den weiteren Komponenten des Wechselrichtersystems in einem Gehäuse angebracht ist), zeitlich variabel und flexibel verwendbar. Es können unterschiedliche Gleichspannungseinheiten an die Eingänge der Schalteinheit angeschlossen werden, welche dann durch die Schalteinheit flexibel und je nach Bedarf mit einem jeweils passenden DC-Eingang verbunden werden. D.h., die Schalteinheit verbindet dazu in Abhängigkeit von einem jeweiligen Vergleichsergebnis zwischen dem jeweiligen aktuellen Wert zumindest einer Leistungsgröße der jeweils angeschlossenen Gleichspannungseinheiten mit zumindest einem jeweils vorgegebenen Schwellwert die jeweiligen Gleichspannungseinheiten mit zumindest einem jeweils passenden DC-Eingang. Dazu kann die Schalteinheit z.B. eine Gleichspannungseinheit mit einem passenden "freien" DC-Eingang (d.h. der DC-Eingang wird noch nicht für eine Gleichspannungseinheit genutzt) verbinden. Alternativ oder zusätzlich, kann die Schalteinheit auch bestehende Verbindungen zwischen Gleichspannungseinheiten und DC-Eingängen anpassen, indem die Schalteinheit z.B. zu einer bestehenden Verbindung eine weitere Verbindung dazuschaltet oder indem die Schalteinheit z.B. eine bestehende Verbindung auftrennt oder indem die Schalteinheit eine bestehende Verbindung durch eine andere Verbindung ersetzt.

Idealerweise ist eine Anzahl an Eingängen der Schalteinheit größer oder zumindest gleich der vorgegebenen Anzahl an Gleichspannungswandlern und damit der Anzahl an DC-Eingängen. Dadurch wird die Flexibilität des Wechselrichtersystems weiter erhöht, da z.B. zumindest zeitweise unbenutzte Gleichspannungseinheiten - z.B. eine Energiespeichereinheit, welche gerade nicht geladen wird bzw. von welcher gerade keine Energie bezogen wird, weiterhin an die Schalteinheit angeschlossen bleiben können, ohne einen Eingang zu besetzen, welcher beispielsweise für eine andere Gleichspannungseinheit gebraucht würde.

Es ist auch günstig, wenn zumindest ein Gleichspannungswandler des Wechselrichtersystems als bidirektionaler DC-DC-Wandler ausgestaltet ist. Damit können an das Wechselrichtersystem sowohl Gleichspannungsquellen (z.B. PV-Einheiten) als aus Gleichspannungssenken (z.B. Verbraucher) angeschlossen werden und zweckmäßigerweise eine Energiespeichereinheit (z.B. stationäre Batterie) geladen und bei Bedarf an Energie wieder entladen werden.

In einer zweckmäßigen Ausgestaltung des Wechselrichtersystems weisen die Gleichspannungswandler dieselbe Dimensionierung und dieselbe Auslegung in Bezug auf Spannungs-bereich, maximal zulässige Stromstärke und/oder maximal zulässige Leistung auf. Alternativ können die Gleichspannungswandler auch für unterschiedliche Spannungsbereiche, unterschiedliche maximal zulässige Stromstärken und/oder unterschiedliche maximal zulässige Leistung dimensioniert und ausgelegt sein, wodurch das Wechselrichtersystem DC-Eingänge aufweist, welche für Verbindungen mit Gleichspannungseinheiten mit unterschiedlichem Bedarf an z.B. Eingangsspannung, maximal zulässiger Stromstärke, maximal zulässiger Leistung, etc. besser angepasst sind.

Weiterhin ist es vorteilhaft, wenn die Schalteinheit zumindest ein Schaltnetzwerk zum Verbinden der angeschlossenen Gleichspannungseinheiten mit den DC-Eingängen und eine Steuerkomponente aufweist. Die Steuerkomponente kann den aktuellen Wert der zumindest einen Leistungsgröße der jeweils an den Eingängen angeschlossenen Gleichspannungseinheiten ermitteln und den jeweils ermittelten Wert der zumindest einen Leistungsgröße mit zumindest einen Schwellwert vergleichen. Zusätzlich ist die Steuerkomponente dazu eingerichtet, das jeweilige Vergleichsergebnis auszuwerten und das Schaltnetzwerk entsprechend ansteuern. Idealerweise kann die Steuerkomponente in eine Steuereinheit des Wechselrichtersystem integriert sein, um beispielsweise zusätzliche Komponenten zu sparen.

### Kurzbeschreibung der Figuren

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 ein erfindungsgemäßes Wechselrichtersystem für eine Photovoltaikanlage mit unterschiedlichen angebundenen Gleichspannungseinheiten
Fig. 2 einen Ablauf des Verfahrens zum Betreiben des erfindungsgemäßen Wechselrichtersystems
Fig. 3a ein erstes Anwendungsbeispiel für einen Einsatz des erfindungsgemäßen Wechselrichtersystems
Fig. 3b ein zweites Anwendungsbeispiel für den Einsatz des erfindungsgemäßen Wechselrichtersystems
Fig. 3c ein drittes Anwendungsbeispiel für den Einsatz des erfindungsgemäßen Wechselrichtersystems
Figur 4eine Kombination von zumindest zwei oder mehreren erfindungsgemäßen Wechselrichtersystemen

### Ausführung der Erfindung

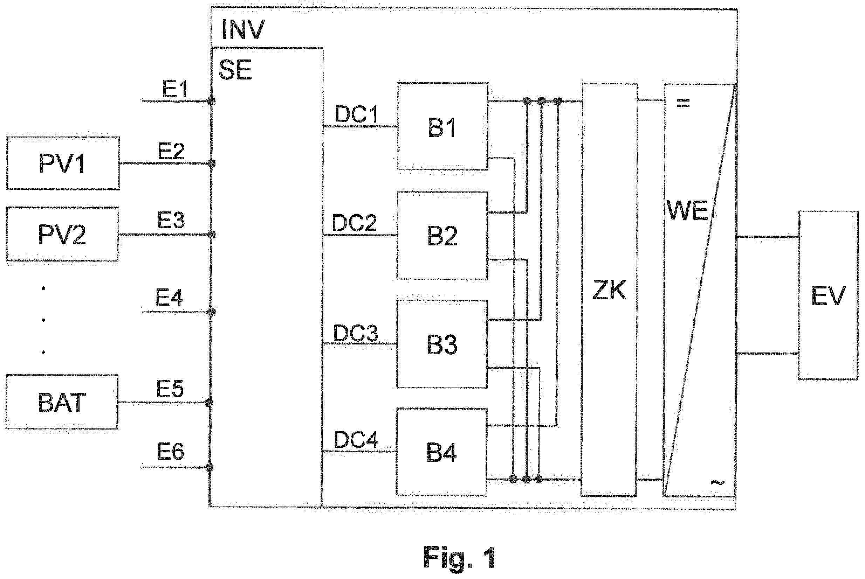

Figur 1 zeigt eine schematische Übersichtsdarstellung eines Wechselrichtersystems INV. Das Wechselrichtersystem INV weist ausgangsseitig eine nicht näher beschriebene Wechselrichtereinheit WE auf. Die Wechselrichtereinheit WE kann beispielsweise schaltungstechnisch als ein- oder dreiphasiger DC-AC-Wandler ausgestaltet sein. Der Ausgang der Wechselrichtereinheit WE bildet den Ausgang des Wechselrichtersystems INV, welcher wiederum mit einem ein- oder dreiphasigen Versorgungsnetz EV und/oder Verbrauchern verbunden wird. Auf einer Eingangsseite der Wechselrichtereinheit WE ist ein Zwischenkreis ZK angeordnet, welcher z.B. durch eine Kapazität gebildet werden kann und die Eingangsspannung für die Wechselrichtereinheit WE liefert. Dem Zwischenkreis ZK und damit der Wechselrichtereinheit WE vorgeschaltet, ist eine vorgegebenen Anzahl an Gleichspannungswandlern B1, B2, B3, B4 angeordnet, deren Ausgänge jeweils parallel an den Zwischenkreis ZK angeschaltet sind.

Die Gleichspannungswandler B1, B2, B3, B4 können beispielsweise als Hochsetzsteller bzw. sogenannte Boost-Konverter oder als Hoch-Tiefsetzsteller bzw. sogenannte Buck-Boost-Konverter ausgestaltet sein und werden oft vereinfacht als Booster B1, B2, B3, B4 bezeichnet. Die Eingänge der Gleichspannungswandler B1, B2, B3, B4 bilden weiterhin die Gleichspannungs- oder DC-Eingänge DC1, DC2, DC3, DC4 des Wechselrichtersystems INV. Dabei gibt die Anzahl der im Wechselrichtersystem INV eingesetzten Gleichspannungswandler B1, B2, B3, B4 die Anzahl der DC-Eingänge DC1, DC2, DC3, DC4 vor. Das in Figur 1 beispielhaft dargestellte Wechselrichtersystem INV weist z.B. vier Gleichspannungswandler B1, B2, B3, B4 und damit vier DC-Eingänge DC1, DC2, DC3, DC4 auf. Das Wechselrichtersystem INV kann aber genauso über eine größere oder kleinere Anzahl an Gleichspannungs-wandler B1, B2, B2, B4 und eine damit verbundene Anzahl an DC-Eingängen DC1, DC2, DC3, DC4 verfügen.

Die DC-Eingänge DC1, DC2, DC3, DC4 des Wechselrichtersystems INV können mit unterschiedlichen Gleichspannungseinheiten PV1, PV2, BAT, wie z.B. PV-Einheiten PV1, PV2, stationäre Energiespeichereinheiten bzw. Batterien BAT, Gleichspannungs-Ladeeinrichtungen EC für ein E-Auto, Gleichspannungs- bzw. DC-Verbraucher VB (z.B. DC-Heizeinheit) und/oder Gleichspannungsquellen GE (z.B. DC-Generator GE) verbunden werden. In Figur 1 sind dabei beispielhaft zwei PV-Einheiten PV1, PV2 sowie eine Batterie BAT dargestellt, welche mit dem Wechselrichtersystem INV verbunden sind.

Weiterhin legt eine Dimensionierung und Auslegung der im Wechselrichtersystem INV verwendeten Gleichspannungswandler B1, B2, B3, B4 die Eigenschaften der DC-Eingänge DC1, DC2, DC3, DC4 in Bezug auf z.B. zulässigen Spannungsbereich, maximal zulässige Stromstärke und/oder maximal zulässige Leistung fest. Auch wird durch die Ausgestaltung der jeweiligen Gleichspannungswandler B1, B2, B3, B4 vorgegeben, ob ein DC-Eingang unidirektional oder bidirektional genutzt werden kann. Dabei können z.B. an einen unidirektionalen DC-Eingang DC1, DC2, DC3, DC4 entweder nur Gleichspannungsquellen, wie z.B. PV-Einheiten PV1, PV2, DC-Generatoren GE oder eine Batterie BAT beim Entladen oder nur Gleichspannungssenken, wie z.B. ein DC-Verbraucher VB, eine Ladeeinrichtung EC für ein E-Auto oder eine Batterie BAT beim Laden, angebunden werden. D.h. die Auslegung und Dimensionierung eines jeweiligen Gleichspannungswandlers B1, B2, B3, B4 geben vor, für welche Gleichspannungseinheit PV1, PV2, BAT der jeweilige DC-Eingang DC1, DC2, DC3, DC4 des Wechselrichtersystems INV genutzt werden kann bzw. ob gegebenfalls auch z.B. zwei Gleichspannungseinheiten PV1, PV2, wie z.B. PV-Einheiten PV1, PV2 bei gleichem Spannungsniveau auf denselben Gleichspannungswandler B1, B2, B3, B4 bzw. an denselben DC-Eingang DC1, DC2, DC3, DC4 geschaltet werden können.

Die im Wechselrichtersystem INV verwendeten Gleichspannungswandler B1, B2, B3, B4 können dazu beispielsweise eine selbe Dimensionierung und Auslegung in Bezug auf einen Spannungsbereich, insbesondere Eingangsspannungsbereich, eine maximal zulässige Stromstärke (z.B. maximal 20 Ampere) und/oder eine maximal zulässige Leistung aufweisen. Dadurch weisen beispielsweise alle DC-Eingänge DC1, DC2, DC3, DC4 dieselben Eigenschaften auf.

Alternativ können die Gleichspannungswandler B1, B2, B3, B4 aber auch für unterschiedliche Spannungsbereich, insbesondere Eingangsspannungsbereiche, unterschiedliche, maximal zulässige Stromstärken und/oder unterschiedliche, maximal zulässige Leistungen dimensioniert und auslegt werden. D.h., die DC-Eingänge DC1, DC2, DC3, DC4 weisen damit unterschiedliche Eigenschaften auf, womit manche DC-Eingänge für eine Verbindung mit manchen Gleichspannungseinheiten PV1, PV2, BAT besser geeignet sind als andere.

Soll - wie in Figur 1 beispielhaft dargestellt - beispielsweise neben PV-Einheiten PV1, PV2 auch eine stationäre Batterie BAT - z.B. zum Speichern überschüssig erzeugter Energie für eine Optimierung im Einspeisebetrieb und/oder als Energiespeicher für Zeiten mit geringer oder keiner Sonneneinstrahlung, so ist es zweckmäßig, wenn zumindest einer der Gleichspannungswandler B1, B2, B3, B4 und damit einer der DC-Eingänge DC1, DC2, DC3, DC4 bidirektional ausgestaltet ist, damit die Batterie BAT über diesen geladen und entladen werden kann.

Beim erfindungsgemäßen Wechselrichtersystem INV ist zwischen den DC-Eingängen DC1, DC2, DC3, DC4 und den anzuschließenden Gleichspannungseinheiten PV1, PV2, BAT eine Schalteinheit SE angeordnet. Die Schalteinheit SE kann in das Wechselrichtersystem INV integriert sein - wie in Figur 1 beispielhaft dargestellt. Alternativ kann die Schalteinheit SE z.B. auch als eigenständige (externe) Einheit ausgeführt sein, welcher dem Wechselrichter-system INV vorgeschaltet wird.

Für die Verbindung mit den DC-Eingängen DC1, DC2, DC3, DC4 bzw. mit den Eingängen der Gleichspannungswandler B1, B2, B3, B4 weist die Schalteinheit SE Ausgänge auf. Diese Ausgänge sind mit den DC-Eingängen DC1, DC2, DC3, DC4 verbunden. Damit ist der Schalteinheit SE die vorgegebene Anzahl der DC-Eingänge DC1, DC2, DC3, DC4 sowie deren jeweilige Eigenschaften (z.B. zulässiger Spannungsbereich, maximal zulässige Stromstärke, maximal zulässige Leistung, Leistungsübertragungsrichtung bzw. unidirektional/bidirektional) bekannt. Die Eigenschaften der jeweiligen DC-Eingänge DC1, DC2, DC3, DC4 können beispielsweise in der Schalteinheit SE hinterlegt sein.

Weiterhin weist die Schalteinheit SE Eingänge E1, ..., E6 auf, an welche die anzuschließenden Gleichspannungseinheiten PV1, PV2, BAT angeschlossen werden können. Dazu kann z.B. während einer Installationsphase der PV-Anlage vorgegeben werden, an welchen Eingang E1, ..., E6 der Schalteinheit SE welche Gleichspannungseinheit PV1, PV2, BAT angeschlossen wird. Diese Zuordnung kann allerdings beliebig erfolgen. Es können auch einzelne Eingänge E1, ..., E6 vorerst unbenutzt bleiben, um z.B. zu einem späteren Zeitpunkt weitere Gleichspannungseinheiten GE, EC, VB anschließen zu können. Die Anzahl der Eingänge E1, ..., E6 der Schalteinheit SE ist dazu idealerweise größer oder zumindest gleich der durch die Gleichspannungswandler B1, B2, B3, B4 vorgegeben Anzahl an DC-Eingängen DC1, DC2, DC3, DC4 bzw. an Ausgängen der Schalteinheit SE. Bei dem in Figur 1 beispielhaft dargestellten Wechselrichtersystem INV sind z.B. vier Gleichspannungswandler B1, B2, B3, B4 vorgesehen, welche vier DC-Eingänge DC1, DC2, DC3, DC4 bilden, während die Schalteinheit SE z.B. sechs Eingänge E1, ..., E6 aufweist, von welchen beispielsweise vorerst nur drei genutzt werden. Es sind z.B. einem Eingang E2 der Schalteinheit SE eine PV-Einheit PV1, an einem Eingang E3 der Schalteinheit SE eine weitere PV-Einheit PV2 und an einem Eingang E5 der Schalteinheit SE eine stationäre Energiespeichereinheit bzw. Batterie BAT angeschlossen. Die weiteren Eingänge E1, E4, E6 der Schalteinheit SE bleiben vorerst z.B. ungenutzt oder könnten mit weiteren Gleichspannungseinheiten GE, EC, VB verbunden sein, wobei eine Zuordnung der jeweiligen Eingänge E1, ..., E6 zu den Gleichspannungseinheiten PV1, PV2, BAT, GE, EC, VB beliebig erfolgen kann.

Weiterhin ist die Schalteinheit SE dazu ausgestaltet, eine Verbindung zwischen den jeweils angeschlossenen Gleichspannungseinheiten PV1, PV2, BAT und zumindest einem passenden DC-Eingang DC1, DC2, DC3, DC4 herzustellen und/oder eine bereits bestehende Verbindung anzupassen, wobei anpassen bedeutet, dass z.B. zu einer bestehenden Verbindung eine weitere Verbindung dazugeschaltet wird oder eine bestehende Verbindung aufgelöst wird oder eine bestehende Verbindung durch eine Verbindung zu einem anderen DC-Eingang DC1, DC2, DC3, DC4 ersetzt wird, welcher für die jeweilige angeschlossene Gleichspannungseinheit PV1, PV2, BAT aufgrund des aktuellen Werts der zumindest einen Leistungsgröße günstigere Eigenschaften aufweist.

Dazu kann die Schalteinheit SE einen aktuellen Wert zumindest einer Leistungsgröße (z.B. eine aktuelle Stromstärke, eine aktuelle Spannung und/oder eine aktuelle Leistung) für jede der an den Eingängen E1, ..., E6 angeschlossenen Gleichspannungseinheiten PV1, PV2, BAT ermitteln. Weiterhin ist die Schalteinheit SE dazu ausgestaltet, jeden der ermittelten, aktuellen Leistungsgrößenwerte mit zumindest einem vorgegebenen Schwellwert zu vergleichen und in Abhängigkeit von einem jeweiligen Vergleichsergebnis die jeweils angeschlossenen Gleichspannungseinheiten PV1, PV2, BAT mit zumindest einem passenden DC-Eingang DC1, DC2, DC3, DC4 zu verbinden und/oder eine bestehende Verbindung anzupassen. Die Schalteinheit SE ist damit dazu eingerichtet, in Abhängigkeit vom jeweiligen Vergleichsergebnis zumindest eine DC-Eingang DC1, DC2, DC3, DC4 mit z.B. passender maximal zulässiger Stromstärke, passender zulässiger Spannung, passender maximal zulässiger Leistung und/oder passender Leistungsübertragungsrichtung (z.B. unidirektional als DC-Senke, unidirektional als DC-Quelle oder bidirektional) zu ermitteln und die Verbindung zur jeweiligen Gleichspannungseinheit PV1, PV2, BAT herzustellen und/oder entsprechend anzupassen.

Besteht z.B. noch keine Verbindung zwischen einer an die Schalteinheit SE angeschlossenen Gleichspannungseinheit PV1, PV2, BAT, so ermittelt die Schalteinheit SE auf Basis des Vergleichsergebnisses einen passenden DC-Eingang DC1, DC2, DC3, DC4 und stellt eine Verbindung zwischen der Gleichspannungseinheit PV1, PV2, BAT und dem passenden DC-Eingang DC1, DC2, DC3, DC4 her, sofern dieser noch nicht für eine andere angeschlossene Gleichspannungseinheit PV1, PV2, BAT genutzt wird.

Bei bestehenden Verbindungen zwischen den angeschlossenen Gleichspannungseinheit PV1, PV2, BAT und den DC-Eingängen DC1, DC2, DC3, DC4 kann die Schalteinheit SE diese in Abhängigkeit des Vergleichsergebnisses anpassen. Das bedeutet, dass die Schalteinheit SE auf Basis des Vergleichsergebnisses prüft, ob die zumindest eine bestehende Verbindung der jeweiligen Gleichspannungseinheit PV1, PV2, BAT mit dem jeweiligen DC-Eingang DC1, DC2, DC3, DC4 noch passend ist - d.h. die für die Gleichspannungseinheit PV1, PV2, BAT aktuell notwendigen Eigenschalten (z.B. zulässiger Spannungsbereich, maximal zulässige Stromstärke, maximal zulässige Leistung, Leistungsübertragungsrichtung bzw. unidirektional/bidirektional) aufweist. Auf Basis des Vergleichsergebnisses kann die Schalteinheit SE dann die bestehende Verbindung unverändert lassen oder anpassen. Dabei bedeutet ein Anpassen der bestehenden Verbindung, dass die Schalteinheit SE z.B. zu einer bestehenden Verbindung zwischen einer Gleichspannungseinheit PV1, PV2, BAT und einem DC-Eingang DC1, DC2, DC3, DC4 eine weitere Verbindung zu einem weiteren DC-Eingang DC1, DC2, DC3, DC4 dazuschaltet, wenn z.B. von der Gleichspannungseinheit PV1, PV2, BAT eine höhere zulässige Stromstärke, eine höhere zulässige Spannung, etc. benötigt wird. Anpassen bedeutet aber auch, dass die Schalteinheit SE auch eine bestehende Verbindung zwischen einer Gleichspannungseinheit PV1, PV2, BAT und einem DC-Eingang DC1, DC2, DC3, DC4 auftrennen kann, wenn z.B. die Verbindung nicht mehr benötigt wird (z.B. Batterie BAT ist aufgeladen, PV-Einheit liegt im Schatten oder es ist Nacht, etc.) oder dass die Schalteinheit SE eine bestehende Verbindung zwischen einer Gleichspannungseinheit PV1, PV2, BAT und einem DC-Eingang DC1, DC2, DC3, DC4 von der Schalteinheit SE durch eine Verbindung zu einem anderen DC-Eingang DC1, DC2, DC3, DC4 ersetzt, wenn z.B. dieser DC-Eingang DC1, DC2, DC3, DC4 für die jeweilige angeschlossene Gleichspannungseinheit PV1, PV2, BAT aufgrund des aktuellen Werts der zumindest einen Leistungsgröße günstigere Eigenschaften aufweist - z.B. wenn eine PV-Einheit PV1, PV2 aufgrund von Sonneneinstrahlung mehr oder aufgrund von Abschattung weniger Energie produziert.

Es können mit der Schalteinheit SE also Verbindungen hergestellt, Verbindungen dazugeschaltet, Verbindungen aufgetrennt und Verbindungen ersetzt werden. Zusammenfassend kann die Schalteinheit SE also Verbindungen flexibel zuordnen - mit anderen Worten also eine flexible und bedarfsorientierte Verbindung zwischen einem DC-Eingang DC1, DC2, DC3, DC4 und einer Gleichspannungseinheit PV1, PV2, BAT ermöglichen.

Die Schalteinheit SE kann dazu zumindest eine Steuerkomponente und ein Schaltnetzwerk aufweisen, welche der einfachheitshalber in Figur 1 nicht dargestellt sind. Die Steuerkomponente der Schalteinheit SE kann beispielsweise in die Steuereinheit der Wechselrichtereinheit INV, von welcher z.B. die Gleichspannungswandler B1, B2, B3, B4 und die Wechselrichtereinheit WE angesteuert werden, integriert sein oder durch einen Mikrokontroller in der Schalteinheit SE realisiert werden. Die Steuerkomponente der Schalteinheit SE ist beispielsweise dazu eingerichtet, zusätzlich zum Ermitteln des aktuellen Werts der zumindest einer Leistungsgröße jeder der jeweils an den Eingängen E1, ..., E6 angeschlossenen Gleichspannungseinheiten PV1, PV2, BAT und zum Vergleich des jeweils ermittelten, aktuellen Werts der zumindest einen Leistungsgröße der angeschlossenen Gleichspannungseinheit PV1, PV2, BAT mit zumindest einem vorgegebenen Schwellwert das jeweilige Vergleichsergebnis auszuwerten und das Schaltnetzwerk entsprechend anzusteuern, um dann die Verbindung der jeweils angeschlossenen Gleichspannungseinheit PV1, PV2, BAT mit dem zumindest einem passenden DC-Eingang DC1, DC2, DC3, DC4 herzustellen und/oder anzupassen.

Über das Schaltnetzwerk werden dann entsprechend dem jeweiligen Vergleichsergebnis und angesteuert durch die Steuerkomponente die jeweiligen Verbindungen zwischen den angeschlossenen Gleichspannungseinheiten PV1, PV2, BAT und den DC-Eingängen DC1, DC2, DC3, DC4 hergestellt bzw. entsprechend angepasst. Das Schaltnetzwerk kann beispielsweise mittels Transistoren, Relais oder als einfachste Ausführungsform mittels manueller Steckverbinder realisiert werden.

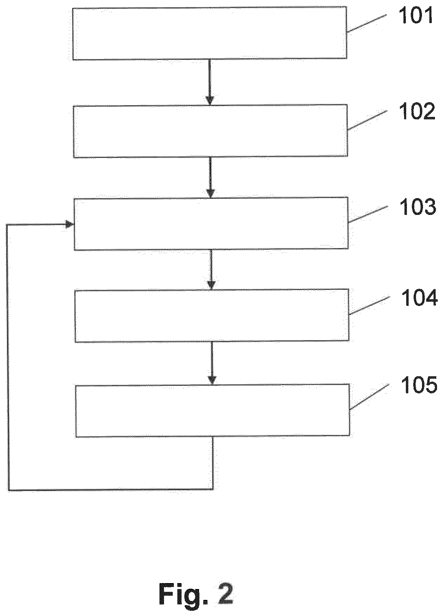

Figur 2 zeigt einen beispielhaften Ablauf eines Verfahrens zum Betreiben des erfindungsgemäßen Wechselrichtersystems INV für eine PV-Anlage. Dabei wird in einem Startschritt 101 die Schalteinheit SE bzw. die Ausgänge der Schalteinheit SE mit den DC-Eingängen DC1, DC2, DC3, DC4 verbunden. Der Startschritt 101 kann beispielsweise vor der Installation der PV-Anlage durchgeführt werden, wenn die Schalteinheit SE als eigenständige (externe) Einheit ausgeführt ist und daher mit dem Wechselrichtersystem INV verbunden werden muss. Ist die Schalteinheit SE in das Wechselrichtersystem INV integriert, so wird der Startschritt 101 z.B. bereits während der Herstellung der Wechselrichtereinheit INV durchgeführt. Durch die Verbindung der Ausgänge der Schalteinheit SE mit den DC-Eingängen DC1, DC2, DC3, DC4 sind beispielsweise die Anzahl der DC-Eingänge DC1, DC2, DC3, DC4 sowie die Eigenschaften der DC-Eingänge DC1, DC2, DC3, DC4 - wie z.B. Spannungsbereich, maximal zulässige Stromstärke, maximal zulässige Leistung, Leistungsübertragungsrichtung - in der Schalteinheit SE bekannt und verfügbar.

In einem Installationsschritt 102 werden dann die jeweiligen Gleichspannungseinheiten PV1, PV2, BAT, EC, GE, VB an die Eingänge E1, ..., E6 der Schalteinheit SE angeschlossen. Damit wird die Schalteinheit SE zwischen den die DC-Eingänge DC1, DC2, DC3, DC4 bildenden Gleichspannungswandlern B1, B2, B3, B4 und den angeschlossenen Gleichspannungseinheiten PV1, PV2, BAT, EC, GE, VB angeordnet. Dabei können den jeweiligen Gleichspannungseinheiten PV1, PV2, BAT, EC, GE, VB die Eingänge E1, ..., E6 der Schalteinheit SE beliebig zugeordnet werden, an welche sie angeschlossen werden. So kann z.B. - wie in Figur 1 dargestellt - an einem Eingang E2 der Schalteinheit SE eine PV-Einheit PV1, an einem Eingang E3 der Schalteinheit SE eine weitere PV-Einheit PV2 und an einem Eingang E5 wird z.B. eine stationäre Batterie BAT zum Speichern überschüssig von den PV-Einheiten PV1, PV2 erzeugter Energie angeschlossen werden. Die weiteren Eingänge E1, E4, E6 können beispielsweise vorerst unbelegt bleiben, um z.B. in einer späteren Wiederholung des Installationsschritts 102 weitere Gleichspannungseinheiten EC, GE, VB anzuschließen. Alternativ können auch bei einem erstmaligen Installationsschritt 102 an alle Eingänge E1, ..., E6 Gleichspannungseinheiten PV1, PV2, BAT, EC, GE, VB mit beliebiger Zuordnung zu den Eingängen E1, ..., E6 angeschlossen werden. D.h. der Installationsschritt 102 kann beispielsweise einmalig durchgeführt werden oder immer dann wiederholt werden, wenn beispielsweise weitere Gleichspannungseinheiten PV1, PV2, BAT, EC, GE, VB an unbelegte Eingänge E1, ..., E6 angeschlossen werden bzw. wenn zumindest eine an einem Eingang E1, ..., E6 angeschlossene Gleichspannungseinheit PV1, PV2, BAT, EC, GE, VB durch eine andere Gleichspannungseinheit PV1, PV2, BAT, EC, GE, VB ersetzt wird.

Weiterhin werden im Installationsschritt 102 die angeschlossenen Gleichspannungseinheiten PV1, PV2, BAT, EC, GE, VB identifiziert. D.h., es wird zumindest ermittelt, welche Arten von Gleichspannungseinheiten PV1, PV2, BAT, EC, GE, VB an den jeweiligen Eingängen E1, ..., E6 angeschlossen sind bzw. ob es sich bei der jeweils angeschlossenen Gleichspannungseinheit PV1, PV2, BAT, EC, GE, VB, um eine Gleichspannungsquelle oder -senke oder um eine Energiespeichereinheit BAT handelt, welche beides sein kann. Dazu kann beispielsweise nach dem Anschließen der jeweiligen Gleichspannungseinheit PV1, PV2, BAT, EC, GE, VB beispielsweise vom Installateur zumindest eine Kenngröße für die jeweilige Gleichspannungseinheit PV1, PV2, BAT, EC, GE, VB eingegeben werden. Als Kenngrößen wären z.B. bei PV-Einheiten PV1, PV2 oder anderen Gleichspannungsquellen GE eine Ausgangsspannung, eine maximaler Ausgangsstrom und/oder eine maximale Ausgangsleistung, bei Batterien BAT z.B. eine Lade-/Entladespannung, ein maximaler Lade-/Entladestrom, eine Ladezustand bzw. State-of-Charge (kurz: SoC), etc. oder bei Gleichspannungssenken EC, VB eine Eingangsspannung, ein maximaler Eingangsstrom und/oder eine maximale Leistung, etc. denkbar.

Alternativ kann die Identifikation der an die Schalteinheit SE angeschlossenen Gleichspannungseinheiten PV1, PV2, BAT, EC, GE, VB auch automatisch erfolgen. Dazu wird beispielsweise nach Anschließen der Gleichspannungseinheiten PV1, PV2, BAT, EC, GE, VB eine Messung von Kenngrößen der angeschlossenen Gleichspannungseinheiten PV1, PV2, BAT, EC, GE, VB oder ein Strom-Spannungskurven-Scan bzw. I-U-Scan durchgeführt. Auf Basis der Messung oder des Scans kann dann beispielsweise zumindest die Art der jeweils angeschlossenen Gleichspannungseinheit PV1, PV2, BAT, EC, GE, VB - d.h. Gleichspannungsquelle oder -senke - und gegebenenfalls zumindest eine Kenngröße der jeweils angeschlossenen Gleichspannungseinheit PV1, PV2, BAT, EC, GE, VB ermittelt werden. Dem Installateur kann dann beispielsweise ein Vorschlag angezeigt werden, welcher z.B. angibt, welche Gleichspannungseinheit PV1, PV2, BAT, EC, GE, VB an welchem Eingang E1, ..., E6 der Schalteinheit SE angeschlossen ist. Dieser Vorschlag kann dann vom Installateur z.B. korrigiert, angepasst oder einfach bestätigt werden.

Weiterhin könnten auch charakteristische Daten der jeweils an die Schalteinheit SE angeschlossenen Gleichspannungseinheiten PV1, PV2, BAT, EC, GE, VB mittels einer Datenverbindung (z.B. PLC, Modbus) ausgelesen und von der Schalteinheit SE ausgewertet werden, um die jeweils angeschlossenen Gleichspannungseinheiten PV1, PV2, BAT, EC, GE, VB zu identifizieren.

Weiterhin können im Installationsschritt 102 die angeschlossenen Gleichspannungseinheiten PV1, PV2, BAT, EC, GE, VB beispielsweise mit Prioritäten versehen werden. Diese Prioritäten können dann beispielsweise von der Schalteinheit SE ausgewertet werden, wenn zwischen den angeschlossenen Gleichspannungseinheiten PV1, PV2, BAT, EC, GE, VB und den DC-Eingängen DC1, DC2, DC3, DC4 eine Verbindung hergestellt wird. Dabei kann festgelegt werden, dass z.B. eine stationäre Batterie BAT zum Speichern von überschüssig erzeugter Energie gegenüber anderen Energiespeichereinheiten oder Ladeeinrichtungen EC bevorzugt verbunden wird, solange diese noch nicht vollständig aufgeladen ist.

Nachdem die Gleichspannungseinheiten PV1, PV2, BAT, EC, GE, VB an die Eingänge E1, ..., E6 der Schalteinheit SE angeschlossen und identifiziert sind, wird in einem Ermittlungsschritt 103 für jede an einem Eingang E1, ..., E6 der Schalteinheit SE angeschlossene Gleichspannungseinheit PV1, PV2, BAT, EC, GE, VB ein aktueller Wert zumindest einer Leistungsgröße dieser angeschlossenen Gleichspannungseinheit PV1, PV2, BAT, EC, GE, VB ermittelt. Als Leistungsgröße kann je nach Art der angeschlossenen Gleichspannungseinheit PV1, PV2, BAT, EC, GE, VB beispielsweise eine aktuelle Eingangs-/Ausgangsspannung, ein aktueller Eingangs-/Ausgangsstrom und/oder eine aktuelle Eingangs-/Ausgangsleistung herangezogen werden. Bei dem in Figur 1 dargestellten Wechselrichtersystem INV könnte beispielsweise für die am Eingang E2 der Schalteinheit SE angeschlossene PV-Einheit PV1 ein aktueller Wert der Ausgangsspannung, des Ausgangsstrom und/oder der Ausgangsleistung als Leistungsgröße ermittelt werden - ebenso für die am Eingang E3 angeschlossene, weitere PV-Einheit PV2. Für die am Eingang E5 angeschlossene, stationäre Batterie BAT könnte z.B. ein aktueller Wert des Ladestrom und/oder des State-of-Charge (SoC) ermittelt werden, wenn diese geladen wird, oder ein aktueller Wert des Entladestrom und/oder der Depth-of-Decharge (DoD), wenn diese entladen wird. Bei einer an einem Eingang E1, ..., E6 angeschlossenen Gleichspannungssenke VB, EC könnte z.B. ein aktueller Wert eines Eingangsstroms, einer Eingangsspannung und/oder einer Eingangsleistung von der Schalteinheit SE ermittelt werden.

In einem folgenden Vergleichsschritt 104 wird dann der für jede Gleichspannungseinheit PV1, PV2, BAT, EC, GE, VB ermittelte, aktuelle Wert der zumindest einen Leistungsgröße mit zumindest einem vorgegeben Schwellwert verglichen. Je nach verwendeter Leistungsgröße können z.B. Stromgrenzen, Spannungsgrenzen und/oder Leistungsgrenzen als Schwellwert vorgegeben werden. Für angeschlossene Energiespeichereinheiten BAT wären auch Schwellwerte auf Basis eines Lade- und/oder Entladezustand denkbar. Für Gleichspannungseinheiten PV1, PV2, BAT, EC, GE, VB, bei welchen z.B. aktuelle Werte der zumindest einen Leistungsgröße stark schwanken oder sich verändern können, wie z.B. bei PV-Einheiten PV1, PV2, können beispielsweise auch mehrere Schwellwerte vorgegeben werden. Die jeweiligen, vorgegebenen Schwellwerte können beispielsweise auf Basis der Eigenschaften der DC-Eingänge (z.B. Spannungsbereich, maximal zulässige Stromstärke und/oder maximal zulässige Leistung) vorgegeben werden.

In einem Verbindungsschritt 105 wird dann von der Schalteinheit SE, insbesondere von der Steuerkomponente der Schalteinheit SE, das Vergleichsergebnis für jede angeschlossene Gleichspannungseinheit PV1, PV2, BAT, EC, GE, VB ausgewertet. In Abhängigkeit vom jeweiligen Vergleichsergebnis wird der Eingang E1, ..., E6 der Schalteinheit SE, an welchem die jeweilige Gleichspannungseinheit PV1, PV2, BAT, EC, GE, VB angeschlossen ist, mit zumindest einem der DC-Eingänge DC1, ..., DC4 verbunden, welcher die für die jeweilige angeschlossene Gleichspannungseinheit PV1, PV2, BAT, EC, GE, VB die passenden Eigenschaften aufweist. D.h., besteht z.B. noch keine Verbindung zwischen einer an die Schalteinheit SE angeschlossenen Gleichspannungseinheit PV1, PV2, BAT, EC, GE, VB, so ermittelt die Schalteinheit SE auf Basis des Vergleichsergebnisses einen passenden DC-Eingang DC1, DC2, DC3, DC4 und stellt eine Verbindung zwischen der Gleichspannungseinheit PV1, PV2, BAT, EC, GE, VB und dem passenden DC-Eingang DC1, DC2, DC3, DC4 her, sofern dieser noch nicht von einer anderen Gleichspannungseinheit PV1, PV2, BAT, EC, GE, VB genutzt wird.

Besteht bereits zumindest eine Verbindung zwischen dem Eingang E1, ..., E6 der Schalteinheit SE, an welchem die jeweilige Gleichspannungseinheit PV1, PV2, BAT, EC, GE, VB angeschlossen ist, und zumindest einem der DC-Eingänge DC1, DC2, DC3, DC4, so kann die Verbindung auf Basis des Vergleichsergebnisses entsprechend angepasst werden. Dabei kann von der Schalteinheit SE z.B. auf Basis des Vergleichsergebnisses geprüft werden, ob ein mit der jeweiligen Gleichspannungseinheit PV1, PV2, BAT, EC, GE, VB verbundener DC-Eingang DC1, DC2, DC3, DC4 noch passend ist. Dementsprechend kann z.B. zu einer bestehenden Verbindung zwischen einer Gleichspannungseinheit PV1, PV2, BAT, EC, GE, VB und einem DC-Eingang DC1, DC2, DC3, DC4 noch eine weitere Verbindung zu einem weiteren DC-Eingang DC1, DC2, DC3, DC4 dazugeschaltet werden. D.h., es wird beispielsweise der Eingang E1, ..., E6 der jeweiligen Gleichspannungseinheit PV1, PV2, BAT, EC, GE, VB mit einem weiteren DC-Eingang DC1, DC2, DC3, DC4 verbunden, wenn z.B. der zumindest einen Schwellwert überschritten wird. Alternativ, kann beim Anpassen der Verbindungen von der Schalteinheit SE auch eine bestehende Verbindung zwischen einer Gleichspannungseinheit PV1, PV2, BAT, EC, GE, VB und einem DC-Eingang DC1, DC2, DC3, DC4 aufgetrennt werden, weil z.B. die Verbindung gerade nicht benötigt wird (z.B. Batterie BAT ist aufgeladen, PV-Einheit PV1, PV2 liegt im Schatten, etc.). Dazu wird z.B. die Verbindung zwischen dem Eingang E1, ..., E6 der jeweiligen Gleichspannungseinheit PV1, PV2, BAT, EC, GE, VB und zumindest einem DC-Eingang DC1, DC2, DC3, DC4 aufgetrennt. Weiterhin ist auch denkbar, dass beim Anpassen der Verbindungen eine bestehende Verbindung zwischen einer Gleichspannungseinheit PV1, PV2, BAT, EC, GE, VB und einem DC-Eingang DC1, DC2, DC3, DC4 von der Schalteinheit SE durch eine Verbindung zu einem anderen DC-Eingang DC1, DC2, DC3, DC4 ersetzt wird, wenn z.B. dieser DC-Eingang DC1, DC2, DC3, DC4 für die jeweilige angeschlossene Gleichspannungseinheit PV1, PV2, BAT, EC, GE, VB aufgrund des aktuellen Werts der zumindest einen Leistungsgröße günstigere Eigenschaften aufweist - z.B. wenn eine PV-Einheit PV1, PV2 aufgrund von Sonneneinstrahlung mehr oder aufgrund von Abschattung weniger Energie produziert.

Weiterhin bietet das Wechselrichtersystem INV die Möglichkeit, dass im Verbindungsschritt 105 DC-Eingänge DC1, DC2, DC3, DC4 bzw. die zugehörigen Gleichspannungswandler B1, B2, B3, B4 in Serie geschaltet werden, um beispielsweise den Spannungsbereich zu erweitern. D.h., reicht beispielsweise der Spannungsbereich eines Gleichspannungswandler B1, B2, B3, B4 nicht mehr aus, um die Eingangsspannung auf eine geeignete Ausgangsspannung hinauf- oder hinunterzusetzen, so können z.B. zwei oder mehrere DC-Eingänge DC1, DC2, DC3, DC4 in Serie geschaltet werden. Diese Möglichkeit wird z.B. genutzt, um Batterien BAT mit einem niedrigen Spannungsbereich - beispielsweise im Bereich von 50 Volt - an das Wechselrichtersystem INV anschließen zu können.

Weiterhin können der Ermittlungsschritt 103, der Vergleichsschritt 104 und der Verbindungsschritt 105 in vorgegebenen Zeitabständen erneut durchlaufen werden. Die Schritte 103, 104 und 105 können dabei z.B. periodisch (z.B. stündlich, etc.) oder zu vorgegebenen Zeitpunkten (z.B. morgens, mittags, abends, etc.) wiederholt werden. Dazu wird nach Ablauf eines vorgegebenen Zeitabstands (z.B. nach Ablauf einer Stunde, etc.) oder bei Erreichen eines vorgegebenen Zeitpunkts (z.B. 7:00 morgens, 12:00 mittags, 19:00 abends, etc.) wieder der Ermittlungsschritt 103 ausgeführt, um z.B. Veränderungen bei den Leistungsgrößen der angeschlossenen Gleichspannungseinheiten PV1, PV2, BAT, EC, GE, VB feststellen zu können.

Im Ermittlungsschritt 103 wird dann neuerlich für jede an einem Eingang E1, ..., E6 der Schalteinheit SE angeschlossene Gleichspannungseinheit PV1, PV2, BAT, EC, GE, VB ein neuer, aktueller Wert zumindest einer Leistungsgröße dieser angeschlossenen Gleichspannungseinheit PV1, PV2, BAT, EC, GE, VB ermittelt. In der Folge wird dann bei der Wiederholung des Vergleichsschritts 104 der jeweils neu für die angeschlossenen Gleichspannungseinheiten PV1, PV2, BAT, EC, GE, VB ermittelte, aktuelle Wert der zumindest einen Leistungsgröße mit dem zumindest einen Schwellwert verglichen. Beim neuerlichen Durchlauf des Verbindungsschritts 105 wird dann von der Schalteinheit SE das neue Vergleichsergebnis für jede angeschlossene Gleichspannungseinheit PV1, PV2, BAT, EC, GE, VB ausgewertet. Es werden dann die bestehenden Verbindungen zwischen den Eingängen E1, ..., E6 der Schalteinheit SE, an welchen die jeweiligen Gleichspannungseinheiten PV1, PV2, BAT, EC, GE, VB angeschlossen sind, und den DC-Eingänge DC1, DC2, DC3, DC4 auf Basis des Vergleichsergebnisses aus dem Vergleichsschritt 104 entsprechend angepasst. Damit können beispielsweise Veränderung in der Energieerzeugung von PV-Einheiten PV1, PV2 aufgrund von veränderter Sonneneinstrahlung, Abschattungen, geänderten Witterungsverhältnissen, etc., Lade-/Entladezustandsänderungen bei Energiespeichereinheiten BAT, EC, etc. erkannt und berücksichtigt werden.

Alternativ können der Ermittlungsschritt 103 bzw. der Vergleichsschritt 104 auch mit deutlich kürzeren Periodenzeiten ausgeführt werden (z.B. sekündlich). Um Schaltzyklen aber dabei eher niedrig zu halten, kann durch Hysteresen und z.B. Mindestlaufzeiten der Verbindungsschritt 105 in seiner Häufigkeit begrenzt werden.

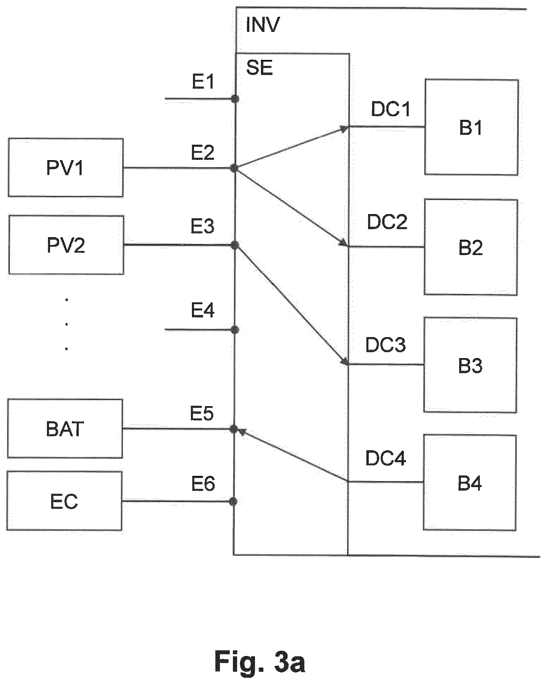

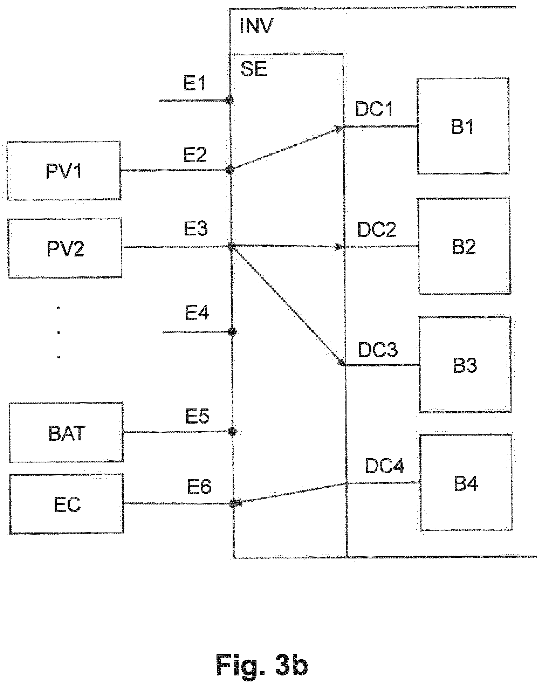

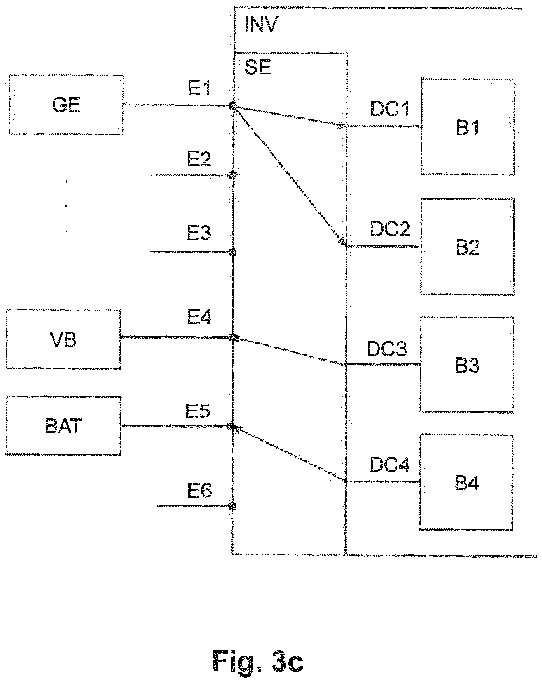

In der Folge werden anhand von in den Figuren 3a, 3b und 3c beispielshaft mögliche Anwendungsfälle des erfindungsgemäßen Wechselrichtersystems INV sowie des zugehörigen Verfahrens zum Betreiben des Wechselrichtersystems INV näher beschrieben.

Figur 3a zeigt - der Einfachheit halber - nur mehr die für das Verfahren relevanten Einheiten des erfindungsgemäßen Wechselrichtersystems INV. Dabei sind beispielshaft die DC-Eingänge DC1, DC2, DC3, DC4 mit den zugehörigen Gleichspannungswandlern B1, B2, B3, B4 dargestellt, welche die Eigenschaften der jeweiligen DC-Eingänge DC1, DC2, DC3, DC4 vorgegeben. Dabei bildet z.B. ein erster Gleichspannungswandler B1 einen ersten DC-Eingang DC1, ein zweiter Gleichspannungswandler B2 einen zweiten DC-Eingang DC2, ein dritter Gleichspannungswandler B3 einen dritten DC-Eingang DC3 und ein vierter Gleichspannungswandler B4 einen vierten DC-Eingang DC4. Die Gleichspannungswandler B1, B2, B3, B4 könnten beispielsweise unterschiedlich dimensioniert und ausgelegt sein. So können z.B. der erste und der zweite Gleichspannungswandler B1, B2 unidirektional mit einer Leistungsübertragung vom Ausgang der Schalteinheit SE zum Wechselrichter WE ausgestaltet sein. Der dritte und der vierte Gleichspannungswandler B3, B4 können beispielsweise bidirektional ausgestaltet sein und damit Leistung in beide Richtungen übertragen. In Bezug auf z.B. Spannungsbereiche, maximal zulässige Stromstärke und/oder maximal zulässige Leistung können die Gleichspannungswandler B1, B2, B3, B4 beispielsweise gleich oder unterschiedlich ausgelegt sein. Weiterhin ist die Schalteinheit SE dargestellt, welche ausgangsseitig mit den DC-Eingängen DC1, DC2, DC3, DC4 verbunden ist.

An den Eingängen E1, ..., E6 der Schalteinheit SE, welche auch die Eingänge E1, ..., E6 des Wechselrichtersystems INV bilden, sind beispielsweise zwei unterschiedlich ausgerichtete PV-Einheiten PV1, PV2, eine stationäre Batterie BAT zum Speichern überschüssig erzeugter Energie sowie eine Ladeeinrichtung EC für ein E-Auto mit beliebiger Zuordnung angeschlossen. Dabei ist z.B. eine nach Osten ausgerichtete PV-Einheit PV1 am Eingang E2 der Schalteinheit SE, eine nach Westen ausgerichtete, weitere PV-Einheit PV2 am Eingang E3 der Schalteinheit SE, die stationäre Batterie BAT am Eingang E5 der Schalteinheit SE und die Ladeeinrichtung EC am Eingang E6 der Schalteinheit SE angeschlossen. Nach dem Installationsschritt 102 ist der Schalteinheit SE zumindest eine Kenngröße der angeschlossen Gleichspannungseinheiten PV1, PV2, BAT, EC bekannt. Gegebenenfalls sind die Gleichspannungseinheiten PV1, PV2, BAT, EC mit Prioritäten versehen, welche von der Schalteinheit SE beim Herstellen der Verbindungen zu den DC-Eingängen DC1, DC2, DC3, DC4 berücksichtigen kann.

Wird nun zu einem vorgegebenen Zeitpunkt (z.B. morgens um 7:00 oder 8:00) der Ermittlungsschritt 103 von der Schalteinheit SE ausgeführt und dabei der aktuelle Wert von zumindest jeweils einer Leistungsgröße für jede der angeschlossenen Gleichspannungseinheiten PV1, PV2, BAT, EC ermittelt, so kann die Schalteinheit SE im Vergleichsschritt 104 feststellen, dass beispielsweise der aktuelle Wert einer Ausgangsspannung, eines Ausgangsstroms und/oder einer Ausgangsleistung der nach Osten ausgerichteten PV-Einheit PV1, welche zum vorgegebenen Zeitpunkt bzw. morgens z.B. einer starken Sonneneinstrahlung ausgesetzt ist, den zumindest eine oder sogar weitere vorgegebene Schwellwerte überschreitet. Im Verbindungsschritt 105 wird von der Schalteinheit SE z.B. zwischen dem Eingang E2 der nach Osten ausgerichteten PV-Einheit PV1 eine Verbindung zum ersten und zum zweiten DC-Eingang DC1, DC2 hergestellt, um die von der nach Osten ausgerichteten PV-Einheit PV1 optimal nutzen zu können. Weiterhin wird im Vergleichsschritt 104 beispielsweise festgestellt, dass die nach Westen ausgerichtete PV-Einheit PV2, welche zum vorgegebenen Zeitpunkt bzw. morgens z.B. eher abgeschattet ist, eine aktuellen Ausgangsspannungs-, Ausgangsstrom- und/oder Ausgangsleistungswert liefert, welcher z.B. gerade den zumindest einen vorgegebenen Schwellwert übersteigt. Daher wird im Verbindungsschritt 105 der Eingang E3 der nach Westen ausgerichteten PV-Einheit PV2 nur mit dem dritten DC-Eingang DC3 verbunden, um auch die Leistung der nach Westen ausgerichteten PV-Einheit PV2 zu nutzen.

Weiterhin werden im Vergleichsschritt 104 aus die für die stationäre Batterie BAT und die Ladeeinrichtung EC ermittelten, aktuellen Werte der jeweiligen, zumindest einen Leistungsgröße (z.B. Ladestrom, SoC) mit entsprechenden, vorgegebene Schwellwerten verglichen. Dabei wird festgestellt, dass z.B. der ermittelte, aktuelle Wert der Leistungsgröße der Batterie BAT (z.B. Ladestrom, SoC) über dem entsprechenden, vorgegeben Schwellwert (z.B. beim Ladestrom) oder unter dem entsprechenden, vorgegebenen Schwellwert (z.B. beim SoC) liegt - also z.B. die Batterie BAT gerade geladen werden kann bzw. geladen wird. Zusätzlich kann auch im Vergleichsschritt 104 festgestellt werden, dass die am Eingang E6 angeschlossene Ladeeinrichtung EC beispielsweise eine niedrigere Priorität als die am Eingang E5 angeschlossene, stationäre Batterie BAT aufweist. Daher wird beispielsweise im Verbindungsschritt 105 der Eingang E5 der Schalteinheit SE, an welchen die Batterie BAT angeschlossen ist, und nicht der Eingang E6 der Schalteinheit SE mit der Ladeeinrichtung EC z.B. mit dem verbliebenen, vierten DC-Eingang DC4, welche bidirektional ist und auch ein Entladen der Batterie BAT ermöglicht, verbunden. Alternativ können im Vergleichsschritt 105 allerdings auch festgestellt werden, dass z.B. die am Eingang E6 angeschlossene Ladeeinrichtung EC z.B. nicht in Verwendung ist oder die E-Auto-Batterie aufgeladen ist, da der aktuelle Wert der jeweiligen Leistungsgröße (z.B. Ladestrom, etc.) beispielsweise unterhalb des vorgegebenen Schwellwerts liegt und daher keine Verbindung zu einem DC-Eingang DC1, DC2, DC3, DC4 notwendig ist.

In Figur 3b ist wieder wie in Figur 3a das Wechselrichtersystem INV mit den vier Gleichspannungswandlern B1, B2, B3, B4, welche die vier DC-Eingänge DC1, DC2, DC3, DC4 bilden, und der Schalteinheit SE beispielhaft dargestellt, an welches am Eingang E2 die nach Osten ausgerichtete PV-Einheit PV1, am Eingang E3 die nach Westen ausgerichtete PV-Einheit PV2, am Eingang E5 die stationäre Batterie BAT und am Eingang E6 die Ladeeinrichtung EC angeschlossen sind.

Der Ermittlungsschritt 103 wird beispielsweise nun nach einem vorgegebenen Zeitabstand - z.B. nach 8 Stunden - bzw. zu einem vorgegebenen Zeitpunkt z.B. mittags (z.B. 12:00) oder frühnachmittags (z.B. 13:00) - erneut durchgeführt, um neuerlich für jede angeschlossene Gleichspannungseinheit PV1, PV2, BAT, EC aktuelle Werte der jeweiligen, zumindest einen Leistungsgröße zu ermitteln. Da sich mittlerweile die Sonneneinstrahlung bzw. Abschattung bei den PV-Einheiten PV1, PV2 verändert hat, werden nun für die PV-Einheiten an den jeweiligen Eingängen E2, E3 der Schalteinheit SE veränderte aktuelle Werte ermittelt. Im Vergleichsschritt 104 wird nun beispielsweise festgestellt, dass der aktuelle Leistungsgrößenwert (z.B. Ausgangsspannung, Ausgangsstrom und/oder Ausgangsleistung) der nach Osten ausgerichteten PV-Einheit PV1 z.B. unter einen vorgegeben Schwellwert gesunken ist. Die Verbindung des Eingangs E2 der nach Osten ausgerichteten PV-Einheit PV1 wird daher im Verbindungsschritt 105 entsprechend angepasst, indem z.B. die Verbindung zwischen dem Eingang E2 der Schalteinheit E2 und dem zweiten DC-Eingang DC2 aufgetrennt wird. Die nach Osten ausgerichteten PV-Einheit PV1 ist z.B. nur mehr mit dem ersten DC-Eingang DC1 verbunden, um die verbliebene, erzeugte Energie zu nutzen. Wäre der ermittelte, aktuelle Wert der zumindest einen Leistungsgröße z.B. aufgrund von veränderter Abschattung, Witterung, etc. noch weiter abgesunken, so könnte z.B. auch die Verbindung zum ersten DC-Eingang DC1 getrennt werden.

Weiterhin wird im Vergleichsschritt 104 festgestellt, dass der ermittelte, aktuelle Wert der zumindest einen Leistungsgröße der nach Westen ausgerichteten PV-Einheit PV2 angestiegen ist. Es wird z.B. ein weiterer, vorgegebenen Schwellwert überschritten. Daher wird im Verbindungsschritt 105 nun die Verbindung des Eingangs E3, an welchen die nach Westen ausgerichtete PV-Einheit PV2 angeschlossen ist, dahingehen angepasst, dass der Eingang E3 der Schalteinheit SE nun zusätzlich zum dritten DC-Eingang DC3 mit dem freigewordenen, zweiten DC-Eingang DC2 verbunden wird, um die erzeugte Energie optimal zu nutzen. Durch das Wechselrichtersystem INV und das zugehörige Verfahren ist es damit möglich, PV-Anlagen mit beispielsweise Ost-West-ausgerichteten PV-Einheiten PV1, PV2 optimal zu nutzen und die jeweilige PV-Einheiten PV1, PV2, welche aufgrund der Sonneneinstrahlung mehr Energie erzeugt, mit einer entsprechenden Anzahl von DC-Eingängen DC1, DC2, DC3 und/oder entsprechend dimensionierten DC-Eingängen DC1, DC2, DC3, DC4 zu verbinden.

Weiterhin könnte bei unterschiedlich dimensionierten Gleichspannungswandlern bzw. DC-Eingängen DC1, DC2, DC3, DC4 des Wechselrichtersystem INV eine PV-Einheit PV1, PV2 je nach erzeugter Energie durch Ausführen des Ermittlungsschritts 103, des Vergleichsschritts 104 und des Verbindungsschritts 105 von einer Verbindung mit z.B. zwei kleiner dimensionierten DC-Eingängen DC1, DC2, DC3, DC4 auf z.B. einen größer dimensionierten DC-Eingang DC1, DC2, DC3, DC4 oder von einem größer dimensionierten DC-Eingang DC1, DC2, DC3, DC4 auf z.B. kleiner dimensionierten DC-Eingängen DC1, DC2, DC3, DC4 durch die Schalteinheit SE umgeschaltet werden. Weiterhin besteht auch die Möglichkeit, beispielsweise die Eingänge E1, ..., E6 zweier PV-Einheiten PV1, PV2 auf denselben DC-Eingang DC1, DC2, DC3, DC4 zu schalten, sofern das Spannungsniveau der PV-Einheiten PV1, PV2 zusammenpasst. Dadurch können die Anzahl der DC-Eingänge DC1, DC2, DC3, DC4 sowie die DC-Eingänge DC1, DC2, DC3, DC4 selbst optimal genutzt werden.

Weiterhin kann bei der in Figur 3b dargestellten Wiederholung des Ermittlungsschritts 103 und des Vergleichsschritts 104 nach einem Zeitabstand von z.B. 8 Stunden bzw. zu einem vorgegebenen Zeitpunkt (z.B. mittags oder früh nachmittags) festgestellt werden, dass beispielsweise die stationäre Batterie BAT mittlerweile aufgeladen wurden, da z.B. der ermittelte, aktuelle Wert der zumindest einen Leistungsgröße (z.B. Ladestrom, SoC) beispielsweise unter dem vorgegeben Schwellwert (z.B. beim Ladestrom) bzw. über dem vorgegebenen Schwellwert (z.B. beim SoC) liegt. Im Verbindungsschritt 105 wird daher die Verbindung zwischen dem Eingang E5 der Schalteinheit SE, an welchem die Batterie BAT angeschlossen ist, dahingehen beispielsweise angepasst, dass die Verbindung zum vierten DC-Eingang DC4 getrennt wird. Da nun der vierte - z.B. bidirektional ausgestaltete - DC-Eingang DC4 frei ist, kann nun beispielsweise der vierte DC-Eingang DC4 mit dem Eingang E6 der Schalteinheit SE verbunden werden, an welchen die z.B. mit einer geringeren Priorität versehene Ladeeinrichtung EC angeschlossen ist - sofern diese in Verwendung ist, um z.B. eine E-Auto-Batterie aufzuladen.

In Figur 3c ist ein weiterer, beispielhafter Anwendungsfall für das Wechselrichtersystem INV und das zugehörige Verfahren dargestellt. So wird beispielshafte aufgrund der Jahreszeit, Witterung, etc. z.B. in einer Wiederholung des Installationsschritts 102 an den Eingang E1 des Wechselrichtersystems INV bzw. der Schalteinheit SE ein DC-Generator GE als Back-Up für die PV-Einheiten PV1, PV2, welche in Figur 3c nicht dargestellt sind, bzw. für das in Figur 3c nicht dargestellte Versorgungsnetz EV angeschlossen. Weiterhin ist z.B. am Eingang E4 der Schalteinheit SE eine Gleichspannungssenke VB bzw. ein Verbraucher VB (z.B. DC-Heizeinheit) angeschlossen sowie am Eingang E5 wieder die stationäre Batterie BAT angeschlossen, welche z.B. ziemlich entladen ist. Durch die Identifikation im Installationsschritt 102 sind der Schalteinheit SE bzw. dem Wechselrichtersystem INV die jeweils angeschlossenen Gleichspannungseinheiten GE, VB, BAT bekannt. Im Ermittlungsschritt 103 werden nun wieder für jede der angeschlossenen Gleichspannungseinheiten GE, VB, BAT jeweils aktuelle Werte der jeweiligen, zumindest einen Leistungsgröße, welche beispielsweise spezifisch für die jeweilige Gleichspannungseinheit GE, VB, BAT ist, ermittelt. Die ermittelten, aktuellen Werte werden dann im Vergleichsschritt 104 mit entsprechenden, vorgegebenen Schwellwerten verglichen und dann im Verbindungsschritt 105 entsprechend dem jeweiligen Vergleichsergebnis die Eingänge E1, E4, E5 mit den passenden DC-Eingängen DC1, DC2, DC3, DC4 verbunden. So kann z.B. der Eingang E1 des DC-Generators GE mit einem der oder beiden z.B. unidirektionalen DC-Eingängen DC1, DC2 verbunden werden. Der Eingang E4 des Verbraucher VB wird z.B. mit dem bidirektionalen, dritten DC-Eingang DC3 verbunden, um mit Energie versorgt zu werden, und die Eingang E5 der Batterie BAT z.B. mit dem bidirektionalen, vierten DC-Eingang DC4, um beispielsweise mit überschüssiger Energie des DC-Generators geladen zu werden.

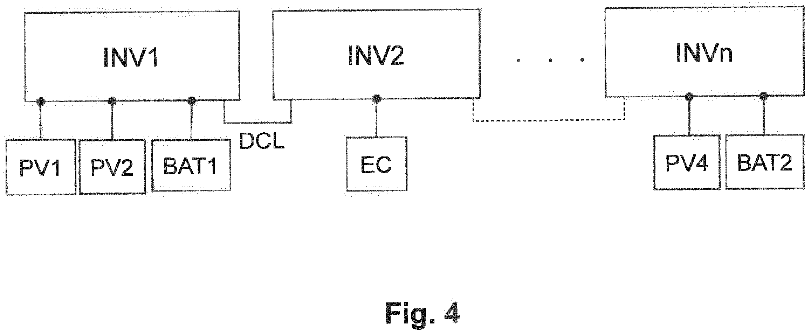

Weiterhin besteht, wie in Figur 4 beispielhaft dargestellt, die Möglichkeit, zwei oder mehrere Wechselrichtersystem INV1, INV2, ..., INVn zusammenzuschließen, indem beispielsweise ein Eingang E1, ..., E6 der Schalteinheit SE eines ersten Wechselrichtersystems INV1 mit einem Eingang E1, ..., E6 der Schalteinheit SE eines zweiten Wechselrichtersystems INV2 über eine Verbindung DCL verbunden wird. Auf diese Weise kann beispielsweise Energie direkt vom ersten Wechselrichtersystem INV1 zum zweiten Wechselrichtersystem INV2 transferiert werden. D.h., es wird z.B. von einer an das erste Wechselrichtersystem INV1 angeschlossenen PV-Einheit PV1, PV2 erzeugte Energie über die Verbindung DCL an die am zweiten Wechselrichtersystem INV2 angeschlossene Ladeeinrichtung EC für z.B. ein Elektroauto oder an eine an eine weiteres Wechselrichtersystem INVn angeschlossene stationäre Batterie BAT2 transferiert.

Dazu werden beispielsweise die sich in jedem der Wechselrichtersysteme INV1, INV2, ..., INVn befindlichen Zwischenkreise ZK über einen der DC-Eingänge DC1, DC2, DC3, DC4 der Wechselrichtersysteme INV1, INV2, ..., INVn, welche zusammengeschlossen werden soll, verbunden. Es wird beispielsweise jeweils eine positive und eine negative Seite eines Zwischenkreises ZK des ersten Wechselrichtersystems INV1 mit einer positiven und einer negativen Seite eines Zwischenkreises ZK des zweiten Wechselrichtersystems INV2 verbunden, wobei vor einem Zusammenschließen zunächst die Spannungen der jeweiligen Zwischenkreise ZK angepasst und angeglichen müssen. Erst nachdem die Spannungen der Zwischenkreise ZK angeglichen sind, kann beispielsweise die Verbindung DCL zwischen den Wechselrichtersystemen INV1, INV2 über die Schalteinheit SE geschlossen werden. Mit einem Aufbau einer derartigen elektrischen Verbindung DCL zwischen zwei oder mehreren Wechselrichtersystemen INV1, INV2, ..., INVn können z.B. die einzelnen Zwischenkreise ZK der einzelnen Wechselrichtersysteme INV1, INV2, ..., INVn als ein großer Zwischenkreis ZK gesehen werden. Mittels einem entsprechenden Energiemanagement bzw. einer entsprechenden Regelung wird dafür gesorgt, dass eine Zwischenkreisspannung konstant bleibt und Energieflüsse kontrolliert geregelt werden.

Durch das Zusammenschalten von zwei oder mehreren Wechselrichtersysteme INV1, INV2, ..., INVn bzw. deren Zwischenkreisen ZK wird beispielsweise eine Gesamtkapazität (bzw. gespeicherte Energie) erhöht, welche beispielsweise genutzt werden kann, um Stromspitzen beim Aufbau eines Notstromsystems abzudecken oder Stromspitzen während eines Notstrombetriebs besser abfedern zu können. Dadurch wird eine Stabilität und Belastbarkeit eine Notstromsystems erhöht.

Weiterhin ermöglicht der Zusammenschluss von zwei oder mehreren Wechselrichtersysteme INV1, INV2, ..., INVn bzw. deren Zwischenkreisen ZK eine direkte Gleichspannungsenergie-übertragung zwischen den Wechselrichtersystemen INV1, INV2, ..., INVn. Es kann damit z.B. die Ladeeinrichtung EC für die Batterie eines Elektroautos, welche z.B. an das zweite Wechselrichtersystem INV2 angeschlossen ist, von einer stationären Batterie BAT1 geladen werden, welche mit dem ersten Wechselrichtersystem INV1 verbunden ist. Die Energieübertragung muss dabei idealerweise nicht zuerst vom ersten Wechselrichtersystem INV1 in eine Wechselspannung konvertiert werden, an das zweite Wechselrichtersystem INV2 übertragen und von diesem wieder in eine Gleichspannung konvertiert werden.

Weiterhin stellt der Zusammenschluss von zwei oder mehreren Wechselrichtersysteme INV1, INV2, ..., INVn bzw. deren Zwischenkreisen ZK eine Erweiterung einer Anzahl der DC-Eingänge DC1, DC2, DC3, DC4 eines einzelnen Wechselrichtersystems INV1, INV2, ..., INVn dar, wodurch eine örtliche Flexibilität gesteigert wird. So kann z.B. das erste Wechselrichtersystem INV1, an welches beispielsweise eine oder mehrere PV-Einheiten PV1, PV2 und/oder mit einer stationären Batterie BAT1 angebunden sind, z.B. am Dachboden eines Gebäudes bzw. in örtlicher Nähe der PV-Einheiten PV1, PV2 angebracht sein. Das zweite Wechselrichtersystem INV2, an welches z.B. eine Ladeeinrichtung EC zum Laden einer Batterie eines Elektroautos angebunden ist, beispielsweise in einer Garage oder in Nähe der Ladeeinrichtung EC angebracht sein. Mittels des Zusammenschlusses der beiden Wechselrichtersysteme INV1, INV2 bzw. deren Zwischenkreisen ZK kann beispielsweise direkt Energie von den PV-Einheiten PV1, PV2 und/oder der stationären Batterie BAT1 über das erste und zweite Wechselrichtersystem INV1, INV2 zum Laden der Batterie des Elektroautos in der Garage genutzt werden.

## Patentansprüche

1. Verfahren zum Betreiben eines Wechselrichtersystems (INV) für eine Photovoltaikanlage, welches eine Wechselrichtereinheit (WE) aufweist, welcher über einen Zwischenkreis (ZK) eine vorgegebene Anzahl an Gleichspannungswandlern (B1, ..., B4) vorgeschaltet ist, wobei von den Gleichspannungswandler (B1, ..., B4) DC-Eingänge (DC1, ..., DC4) des Wechselrichtersystems (INV) gebildet werden und eine Anzahl sowie Eigenschaften der DC-Eingänge (DC1, ..., DC4) vorgegeben werden, und wobei die DC-Eingänge (DC1, ..., DC4) mit unterschiedlichen Gleichspannungseinheiten (PV1, PV2, BAT, EC, GE, VB) verbunden werden, ***dadurch gekennzeichnet, dass*** mit den DC-Eingängen (DC1, ..., DC4) eine Schalteinheit (SE) mit Eingängen (E1, ..., E6) zum Anschließen der Gleichspannungseinheiten (PV1, PV2, BAT, EC, GE, VB) verbunden wird (101), ***dass*** an die Eingänge (E1, ..., E6) der Schalteinheit (SE) die Gleichspannungseinheiten (PV1, PV2, BAT, EC, GE, VB) angeschlossen werden (102), wobei die Schalteinheit (SE) zwischen den die DC-Eingänge (DC1, ..., DC4) bildenden Gleichspannungswandlern (B1, ..., B4) und den an die Schalteinheit (SE) angeschlossenen Gleichspannungseinheiten (PV1, PV2, BAT, EC, GE, VB) angeordnet wird, **dass** die unterschiedlichen Gleichspannungseinheiten (PV1, PV2, BAT, EC, GE, VB) identifiziert werden (102), ***dass*** für jede an einem Eingang (E1, ..., E6) der Schalteinheit (SE) angeschlossene Gleichspannungseinheit (PV1, PV2, BAT, EC, GE, VB) ein aktueller Wert zumindest einer Leistungsgröße ermittelt wird (103), ***dass*** der ermittelte, aktuelle Wert der zumindest einen Leistungsgröße mit zumindest einem vorgegebenen Schwellwert verglichen wird (104), ***und dass*** von der Schalteinheit (SE) in Abhängigkeit von einem jeweiligen Vergleichsergebnis für die jeweils angeschlossene Gleichspannungseinheit (PV1, PV2, BAT, EC, GE, VB) zumindest ein passender DC-Eingang (DC1, ..., DC4), welcher für die jeweils angeschlossene Gleichspannungseinheit (PV1, PV2, BAT, EC, GE, VB) passende Eigenschaften, zumindest umfassend einen zulässigen Spannungsbereich, eine maximal zulässige Stromstärke, eine maximal zulässige Leistung und/oder eine Leistungsübertragungsrichtung, aufweist, ermittelt wird und dann eine Verbindung zwischen der jeweils angeschlossenen Gleichspannungseinheit (PV1, PV2, BAT, EC, GE, VB) und dem zumindest einen ermittelten passenden DC-Eingang (DC1, ..., DC4) hergestellt und/oder eine bestehende Verbindung mit einem passenden DC-Eingang (DC1, ..., DC4) angepasst wird (105).

2. Verfahren nach Anspruch 1, ***dadurch gekennzeichnet, dass*** in vorgegebenen Zeitabständen neuerlich der aktuelle Wert der zumindest einen Leistungsgröße für jede der an den Eingängen (E1, ..., E6) der Schalteinheit (SE) angeschlossenen Gleichspannungseinheiten (PV1, PV2, BAT, EC, GE, VB) ermittelt wird (104).

3. Verfahren nach einem der vorangegangenen Ansprüche, ***dadurch gekennzeichnet, dass*** als Leistungsgröße eine Eingangs- oder Ausgangsspannung, ein Eingangs- oder Ausgangsstrom und/oder eine Leistung der jeweils angeschlossenen Gleichspannungseinheit (PV1, PV2, BAT, EC, GE, VB) herangezogen wird (103).

4. Verfahren nach einem der vorangegangenen Ansprüche, ***dadurch gekennzeichnet, dass*** nach Anschließen der Gleichspannungseinheiten (PV1, PV2, BAT, EC, GE, VB) an die Eingänge (E1, ..., E6) der Schalteinheit (SE) für eine Identifikation der jeweils angeschlossenen Gleichspannungseinheiten (PV1, PV2, BAT, EC, GE, VB) zumindest eine Kenngröße für jede der angeschlossenen Gleichspannungseinheiten (PV1, PV2, BAT, EC, GE, VB) eingegeben wird (102).

5. Verfahren nach einem der Ansprüche 1 bis 4, ***dadurch gekennzeichnet, dass*** nach Anschließen der Gleichspannungseinheiten (PV1, PV2, BAT, EC, GE, VB) an die Eingänge (E1, ..., E6) der Schalteinheit (SE) für eine Identifikation der jeweils angeschlossenen Gleichspannungseinheiten (PV1, PV2, BAT, EC, GE, VB) zumindest eine Kenngröße von jeder der angeschlossenen Gleichspannungseinheiten (PV1, PV2, BAT, EC, GE, VB) automatisch ermittelt wird (102).

6. Verfahren nach einem der vorangegangenen Ansprüche, ***dadurch gekennzeichnet, dass*** den unterschiedlichen Gleichspannungseinheiten (PV1, PV2, BAT, EC, GE, VB) die Eingänge (E1, ..., E6) der Schalteinheit (SE) beliebig zugeordnet werden, an welche die Gleichspannungseinheiten (PV1, PV2, BAT, EC, GE, VB) angeschlossen werden (102).

7. Verfahren nach einem der vorangegangenen Ansprüche, ***dadurch gekennzeichnet,* dass** jeder angeschlossenen Gleichspannungseinheiten (PV1, PV2, BAT, EC, GE, VB) eine Priorität zugeordnet wird (102), welche bei einem Herstellen der Verbindung dem zumindest einen DC-Eingang (DC1, ..., DC4) berücksichtigt wird.

8. Wechselrichtersystem (INV) für eine Photovoltaikanlage, welches eine Wechselrichtereinheit (WE) aufweist, welcher über einen Zwischenkreis (ZK) eine vorgegebene Anzahl von Gleichspannungswandler (B1, ..., B4) vorgeschaltet ist, wobei die Gleichspannungs-wandler (B1, ..., B4) die DC-Eingänge (DC1, ..., DC4) des Wechselrichtersystems (INV) bilden und eine Anzahl sowie Eigenschaften der DC-Eingänge (DC1, ..., DC4) vorgeben, und wobei die DC-Eingänge (DC1, ..., DC4) mit unterschiedlichen Gleichspannungseinheiten (PV1, PV2, BAT, EC, GE, VB) verbindbar sind, ***dadurch gekennzeichnet, dass*** das Wechselrichtersystem (INV) eine Schalteinheit (SE) mit Eingängen (E1, ..., E6) zum Anschließen der unterschiedlichen Gleichspannungseinheiten (PV1, PV2, BAT, EC, GE, VB) und Ausgängen zum Verbinden mit den DC-Eingängen (DC1, ..., DC4) aufweist, wobei die Schalteinheit (SE) zwischen den die DC-Eingänge (DC1, ..., DC4) bildenden Gleichspannungswandlern (B1, ..., B4) und den an die Schalteinheit (SE) angeschlossenen Gleichspannungseinheiten (PV1, PV2, BAT, EC, GE, VB) angeordnet ist, und ***dass*** die Schalteinheit (SE) dazu ausgestaltet ist, einen aktuellen Wert zumindest einer Leistungsgröße für jede der an den Eingängen (E1, ..., E6) angeschlossenen Gleichspannungseinheiten (PV1, PV2, BAT, EC, GE, VB) zu ermitteln, den jeweils ermittelten, aktuellen Wert der zumindest einen Leistungsgröße der jeweils an den Eingängen (E1, ..., E6) angeschlossenen Gleichspannungseinheiten (PV1, PV2, BAT, EC, GE, VB) mit zumindest einem vorgegebenen Schwellwert zu vergleichen, in Abhängigkeit von einem jeweiligen Vergleichsergebnis für die jeweils an den Eingängen (E1, ..., E6) angeschlossenen Gleichspannungseinheiten (PV1, PV2, BAT, EC, GE, VB) zumindest einen passenden DC-Eingang (DC1, ..., DC4), welcher für eine jeweils angeschlossene Gleichspannungseinheit (PV1, PV2, BAT, EC, GE, VB) passende Eigenschaften, zumindest umfassend einen zulässigen Spannungsbereich, eine maximal zulässige Stromstärke, eine maximal zulässige Leistung und/oder eine Leistungsübertragungsrichtung, aufweist, zu ermitteln und eine Verbindung der jeweils angeschlossenen Gleichspannungseinheiten (PV1, PV2, BAT, EC, GE, VB) mit dem zumindest einen ermittelten passenden DC-Eingang (DC1, ..., DC4) herzustellen und/oder eine bestehende Verbindung mit einem passenden DC-Eingang (DC1, ..., DC4) anzupassen.

9. Wechselrichtersystem nach Anspruch 8, ***dadurch gekennzeichnet, dass*** eine Anzahl an Eingänge (E1, ..., E6) der Schalteinheit (SE) größer oder zumindest gleich der vorgegebenen Anzahl der Gleichspannungswandler (B1, ..., B4) und der DC-Eingänge (DC1, ..., DC4) ist.

10. Wechselrichtersystem nach einem der Ansprüche 8 oder 9, ***dadurch gekennzeichnet,* dass** zumindest ein Gleichspannungswandler (B1, ..., B4) als bidirektionaler DC-DC-Wandler ausgestaltet sind.

11. Wechselrichtersystem nach einem der Ansprüche 8 bis 10, ***dadurch gekennzeichnet, dass*** die Gleichspannungswandler (B1, ..., B4) dieselbe Dimensionierung und dieselbe Auslegung in Bezug auf Spannungsbereich, maximal zulässige Stromstärke und/oder maximal zulässige Leistung aufweisen.

12. Wechselrichtersystem nach einem der Ansprüche 8 bis 10, ***dadurch gekennzeichnet, dass*** die Gleichspannungswandler (B1, ..., B4) für unterschiedliche Spannungsbereiche, unterschiedliche maximal zulässige Stromstärken und/oder unterschiedliche maximal zulässige Leistung dimensioniert und ausgelegt sind.

13. Wechselrichtersystem nach einem der Ansprüche 8 bis 12, ***dadurch gekennzeichnet, dass*** die Schalteinheit (SE) zumindest ein Schaltnetzwerk zum Verbinden der angeschlossenen Gleichspannungseinheiten (PV1, PV2, BAT, EC, GE, VB) mit den DC-Eingängen (DC1, ..., DC4) und eine Steuerkomponente aufweist, welche zusätzlich zum Ermitteln des aktuellen Werts der zumindest einen Leistungsgröße der jeweils an den Eingängen (E1, ..., E6) angeschlossenen Gleichspannungseinheiten (PV1, PV1, BAT, EC, GE, VB) und zum Vergleichen des jeweils ermittelten Werts der zumindest einen Leistungsgröße mit zumindest einen Schwellwert dazu eingerichtet ist, das jeweilige Vergleichsergebnis auszuwerten und das Schaltnetzwerk entsprechend ansteuern.

14. Wechselrichtersystem nach Anspruch 13, ***dadurch gekennzeichnet, dass*** die Steuerkomponente in eine Steuereinheit des Wechselrichtersystems (INV) integriert ist.

## Claims

1. A method for operating an inverter system (INV) for a photovoltaic system, the inverter system (INV) comprising an inverter unit (WE), to which a predetermined number of DC-to-DC converters (B1, ..., B4) is connected upstream via an intermediate circuit (ZK), the DC-to-DC converters (B1, ..., B4) forming DC inputs (DC1, ..., DC4 of the inverter system (INV) and predetermining the number and properties of the DC inputs (DC1, ..., DC4), wherein the DC inputs (DC1, ..., DC4) are connected to different direct-voltage units (PV1, PV2, BAT, EC, GE, VB), ***characterized in that*** a switching unit (SE) comprising inputs (E1, ..., E6) for connecting the direct-voltage units (PV1, PV2, BAT, EC, GE, VB) is connected (101) to the DC inputs (DC1, ..., DC4), ***in that*** the direct-voltage units (PV1, PV2, BAT, EC, GE, VB) are connected (102) to the inputs (E1, ..., E6) of the switching unit (SE), the switching unit (SE) being arranged between the DC-to-DC converters (B1, ..., B4) forming the DC inputs (DC1, ..., DC4) and the direct-voltage units (PV1, PV2, BAT, EC, GE, VB) connected to the switching unit (SE), ***in that*** the different direct-voltage units (PV1, PV2, BAT, EC, GE, VB) are identified (102), ***in that*** a current value of at least one power variable is determined for each direct-voltage unit (PV1, PV2, BAT, EC, GE, VB) connected to an input (E1, ..., E6) of the switching unit (SE) (103), ***in that*** the determined current value of the at least one power variable is compared with at least one predetermined threshold value (104), ***and in that*** depending on the respective comparison result, the switching unit (SE) determines at least one suitable DC input (DC1, ..., DC4) for the respectively connected direct-voltage unit (PV1, PV2, BAT, EC, GE, VB), the at least one suitable DC input (DC1, ..., DC4) having suitable properties for the respectively connected direct-voltage unit (PV1, PV2, BAT, EC, GE, VB), the properties at least comprising a permissible voltage range, a maximum permissible current, a maximum permissible power, and/or a power transmission direction, and then establishes a connection between the respectively connected direct-voltage unit (PV1, PV2, BAT, EC, GE, VB) and the at least one determined suitable DC input (DC1, ..., DC4) and/or adapts (105) an existing connection with a suitable DC input (DC1, ..., DC4).

2. The method according to claim 1, ***characterized in that*** the current value of at least one power variable for each of the direct-voltage units (PV1, PV2, BAT, EC, GE, VB) connected to the inputs (E1, ..., E6) of the switching unit (SE) is determined again at predetermined time intervals (104).

3. The method according to any of the preceding claims, ***characterized in that*** an input or output voltage, an input or output current and/or a power of the respectively connected direct-voltage unit (PV1, PV2, BAT, EC, GE, VB) is used as the power variable (103).

4. The method according to any of the preceding claims, ***characterized in that***, after connecting the direct-voltage units (PV1, PV2, BAT, EC, GE, VB) to the inputs (E1, ..., E6) of the switching unit (SE), at least one characteristic value for each of the connected direct-voltage units (PV1, PV2, BAT, EC, GE, VB) is entered (102) for identification of the respectively connected direct-voltage units (PV1, PV2, BAT, EC, GE, VB).

5. The method according to any of claims 1 to 4, ***characterized in that***, after connecting the direct-voltage units (PV1, PV2, BAT, EC, GE, VB) to the inputs (E1, ..., E6) of the switching unit (SE), at least one characteristic value for each of the connected direct-voltage units (PV1, PV2, BAT, EC, GE, VB) is automatically determined (102) for identification of the respectively connected direct-voltage units (PV1, PV2, BAT, EC, GE, VB).

6. The method according to any of the preceding claims, ***characterized in that*** the inputs (E1, ..., E6) of the switching unit (SE), to which the direct-voltage units (PV1, PV2, BAT, EC, GE, VB) are connected (102), are freely assigned to the different direct-voltage units (PV1, PV2, BAT, EC, GE, VB).

7. The method according to any of the preceding claims, ***characterized in that*** each connected direct-voltage unit (PV1, PV2, BAT, EC, GE, VB) is assigned a priority (102), which is considered when establishing the connection to at least one DC input (DC1, ..., DC4).

8. An inverter system (INV) for a photovoltaic system, comprising an inverter unit (WE), to which a predetermined number of DC-to-DC converters (B1, ..., B4) is connected upstream via an intermediate circuit (ZK), the DC-to-DC converters (B1, ..., B4) forming the DC inputs (DC1, ..., DC4) of the inverter system and predetermining the number and properties of the DC inputs (DC1, ..., DC4), wherein the DC inputs (DC1, ..., DC4) are connectable to different direct-voltage units (PV1, PV2, BAT, EC, GE, VB), ***characterized in that*** the inverter system (INV) comprises a switching unit (SE) comprising inputs (E1, ..., E6) for connecting the different direct-voltage units (PV1, PV2, BAT, EC, GE, VB) and outputs for connecting to the DC inputs (DC1, ..., DC4), wherein the switching unit (SE) is arranged between the DC-to-DC converters (B1, ..., B4) forming the DC inputs (DC1, ..., DC4) and the direct-voltage units (PV1, PV2, BAT, EC, GE, VB) connected to the switching unit (SE), and ***in that*** the switching unit (SE) is configured to determine a current value of at least one power variable for each of the direct-voltage units (PV1, PV2, BAT, EC, GE, VB) connected to the inputs (E1, ..., E6), to compare the determined current value of the at least one power variable of the direct-voltage units (PV1, PV2, BAT, EC, GE, VB) connected to the inputs (E1, ..., E6) with at least one predetermined threshold value, to determine, depending on a respective comparison result, at least one suitable DC input (DC1, ..., DC4) for the direct-voltage units (PV1, PV2, BAT, EC, GE, VB) connected to the inputs (E1, ..., E6), the at least one suitable DC input (DC1, ..., DC4) having suitable properties for a respectively connected direct-voltage unit (PV1, PV2, BAT, EC, GE, VB), the properties at least comprising a permissible voltage range, a maximum permissible current, a maximum permissible power, and/or a power transmission direction, and to establish a connection between the respectively connected direct-voltage units (PV1, PV2, BAT, EC, GE, VB) and the at least one determined suitable DC input (DC1, ..., DC4) and/or adapt an existing connection to a suitable DC input (DC1, ..., DC4).

9. The inverter system according to claim 8, ***characterized in that*** a number of inputs (E1, ..., E6) of the switching unit (SE) is greater than or at least equal to the predetermined number of DC-to-DC converters (B1, ..., B4) and DC inputs (DC1, ..., DC4).

10. The inverter system according to any of claims 8 or 9, ***characterized in that*** at least one DC-to-DC converter (B1, ..., B4) are configured as a bidirectional DC-to-DC converter.

11. The inverter system according to any of claims 8 to 10, ***characterized in that*** the DC-to-DC converters (B1, ..., B4) have the same dimensioning and the same design in terms of voltage range, maximum permissible current and/or maximum permissible power.

12. The inverter system according to any of claims 8 to 10, ***characterized in that*** the DC-to-DC converters (B1, ..., B4) are dimensioned and configured for different voltage ranges, different maximum permissible currents and/or different maximum permissible power.

13. The inverter system according to any of claims 8 to 12, ***characterized in that*** the switching unit (SE) comprises at least one switching network for connecting the connected direct-voltage units (PV1, PV2, BAT, EC, GE, VB) to the DC inputs (DC1, ..., DC4) and a control component, which, in addition to determining the current value of the at least one power variable of the direct-voltage units (PV1, PV1, BAT, EC, GE, VB) connected to the inputs (E1, ..., E6) and comparing the determined current value of the at least one power variable with at least one threshold value, is configured to evaluate the relevant comparison result and control the switching network accordingly.

14. The inverter system according to claim 13, ***characterized in that*** the control component is integrated into a control unit of the inverter system (INV).

## Revendications

1. Procédé permettant de faire fonctionner un système onduleur (INV) destiné à une installation photovoltaïque, lequel système onduleur présente une unité onduleur (WE) à laquelle est raccordé, par l'intermédiaire d'un circuit intermédiaire (ZK), un nombre prédéfini de convertisseurs de tension continue (B1, ..., B4), dans lequel les entrées CC (DC1, ..., DC4) du système onduleur (INV) sont formées par des convertisseurs de tension continue (B1, ..., B4), et un nombre ainsi que les caractéristiques des entrées CC (DC1, ..., DC4) sont prédéfinis, et dans lequel les entrées CC (DC1, ..., DC4) sont connectées à différentes unités de tension continue (PV1, PV2, BAT, EC, GE, VB), ***caractérisé en ce qu'***une unité de commutation (SE) comportant des entrées (E1, ..., E6) est connectée aux entrées CC (DC1, ..., DC4) pour le raccordement des unités de tension continue (PV1, PV2, BAT, EC, GE, VB) (101), ***en ce que*** les unités de tension continue (PV1, PV2, BAT, EC, GE, VB) sont raccordées (102) aux entrées (E1, ..., E6) de l'unité de commutation (SE), dans lequel l'unité de commutation (SE) est disposée entre les convertisseurs de tension continue (B1, ..., B4) formant les entrées CC (DC1, ..., DC4) et les unités de tension continue (PV1, PV2, BAT, EC, GE, VB) raccordées à l'unité de commutation (SE), ***en ce que*** les différentes unités de tension continue (PV1, PV2, BAT, EC, GE, VB) sont identifiées (102), ***en ce que***, pour chaque unité de tension continue (PV1, PV2, BAT, EC, GE, VB) raccordée à une entrée (E1, ..., E6) de l'unité de commutation (SE), une valeur actuelle d'au moins une grandeur de puissance est déterminée (103), ***en ce que*** la valeur actuelle déterminée de l'au moins une grandeur de puissance est comparée (104) à au moins une valeur seuil prédéfinie, ***et en ce que*** l'unité de commutation (SE) détermine, en fonction d'un résultat de comparaison donné pour l'unité de tension continue (PV1, PV2, BAT, EC, GE, VB) raccordée, au moins une entrée CC (DC1, ..., DC4) adaptée qui présente des caractéristiques adaptées à l'unité de tension continue (PV1, PV2, BAT, EC, GE, VB), lesquelles caractéristiques comprennent au moins une plage de tension admissible, une intensité de courant maximale admissible, une puissance maximale admissible et/ou un sens de transmission de puissance, puis établit une connexion entre l'unité de tension continue (PV1, PV2, BAT, EC, GE, VB) respectivement raccordée et l'au moins une entrée CC (DC1, ..., DC4) adaptée déterminée et/ou ajuste (105) une connexion existante avec une entrée CC (DC1, ..., DC4) adaptée.

2. Procédé selon la revendication 1, ***caractérisé en ce que***, à intervalles de temps prédéfinis, la valeur actuelle de l'au moins une grandeur de puissance est à nouveau déterminée (104) pour chacune des unités de tension continue (PV1, PV2, BAT, EC, GE, VB) raccordées aux entrées (E1, ..., E6) de l'unité de commutation (SE).

3. Procédé selon l'une des revendications précédentes,
***caractérisé en ce qu'***une tension d'entrée ou de sortie, un courant d'entrée ou de sortie et/ou une puissance de l'unité de tension continue (PV1, PV2, BAT, EC, GE, VB) respectivement raccordée sont utilisés (103) comme grandeur de puissance.

4. Procédé selon l'une des revendications précédentes,
***caractérisé en ce qu'***après le raccordement des unités de tension continue (PV1, PV2, BAT, EC, GE, VB) aux entrées (E1, ..., E6) de l'unité de commutation (SE), au moins une grandeur caractéristique pour chacune des unités de tension continue (PV1, PV2, BAT, EC, GE, VB) raccordées est saisie (102) pour une identification des unités de tension continue (PV1, PV2, BAT, EC, GE, VB) respectivement raccordées.

5. Procédé selon l'une des revendications 1 à 4, ***caractérisé en ce qu'***après le raccordement des unités de tension continue (PV1, PV2, BAT, EC, GE, VB) aux entrées (E1, ..., E6) de l'unité de commutation (SE), au moins une grandeur caractéristique de chacune des unités de tension continue (PV1, PV2, BAT, EC, GE, VB) raccordées est automatiquement déterminée (102) pour une identification des unités de tension continue (PV1, PV2, BAT, EC, GE, VB) respectivement raccordées.

6. Procédé selon l'une des revendications précédentes,
***caractérisé en ce que*** les entrées (E1, ..., E6) de l'unité de commutation (SE) sont attribuées de manière arbitraire aux différentes unités de tension continue (PV1, PV2, BAT, EC, GE, VB), entrées auxquelles les unités de tension continue (PV1, PV2, BAT, EC, GE, VB) sont raccordées (102).

7. Procédé selon l'une des revendications précédentes,
***caractérisé en ce qu'***une priorité est attribuée (102) à chacune des unités de tension continue (PV1, PV2, BAT, EC, GE, VB) raccordées, laquelle priorité est prise en compte lors de l'établissement de la connexion avec l'au moins une entrée CC (DC1, ..., DC4).

8. Système onduleur (INV) destiné à une installation photovoltaïque, lequel système onduleur présente une unité onduleur (WE) à laquelle est monté en amont, par l'intermédiaire d'un circuit intermédiaire (ZK), un nombre prédéfini de convertisseurs de tension continue (B1, ..., B4), dans lequel les convertisseurs de tension continue (B1, ..., B4) forment les entrées CC (DC1, ..., DC4) du système onduleur (INV) et définissent un nombre ainsi que les propriétés des entrées CC (DC1, ..., DC4), et dans lequel les entrées CC (DC1, ..., DC4) peuvent être connectées à différentes unités de tension continue (PV1, PV2, BAT, EC, GE, VB), ***caractérisé en ce que le*** système onduleur (INV) présente une unité de commutation (SE) comportant des entrées (E1, ..., E6) pour le raccordement des différentes unités de tension continue (PV1, PV2, BAT, EC, GE, VB) et des sorties pour la connexion aux entrées CC (DC1, ..., DC4), dans lequel l'unité de commutation (SE) est disposée entre les convertisseurs de tension continue (B1, ..., B4) formant les entrées CC (DC1, ..., DC4) et les unités de tension continue (PV1, PV2, BAT, EC, GE, VB) raccordées à l'unité de commutation (SE), ***et en ce que*** l'unité de commutation (SE) est conçue pour déterminer une valeur actuelle d'au moins une grandeur de puissance pour chacune des unités de tension continue (PV1, PV2, BAT, EC, GE, VB) raccordées aux entrées (E1, ..., E6), pour comparer la valeur actuelle respectivement déterminée de l'au moins une grandeur de puissance des unités de tension continue (PV1, PV2, BAT, EC, GE, VB) respectivement raccordées aux entrées (E1, ..., E6) à au moins une valeur seuil prédéfinie, et pour déterminer, en fonction d'un résultat de comparaison respectif pour les unités de tension continue (PV1, PV2, BAT, EC, GE, VB) respectivement raccordées aux entrées (E1, ..., E6), au moins une entrée CC (DC1, ..., DC4) adaptée qui présente des caractéristiques adaptées à une unité de tension continue (PV1, PV2, BAT, EC, GE, VB) respectivement raccordée, lesquelles caractéristiques comprennent au moins une plage de tension admissible, une intensité de courant maximale admissible, une puissance maximale admissible et/ou un sens de transmission de puissance, et pour établir une connexion entre les unités de tension continue (PV1, PV2, BAT, EC, GE, VB) respectivement raccordées et l'au moins une entrée CC (DC1, ..., DC4) adaptée déterminée et/ou pour ajuster une connexion existante avec une entrée CC (DC1, ..., DC4) adaptée.

9. Système onduleur selon la revendication 8, ***caractérisé en ce qu'***un nombre d'entrées (E1, ..., E6) de l'unité de commutation (SE) est supérieur ou au moins égal au nombre prédéfini de convertisseurs de tension continue (B1, ..., B4) et d'entrées CC (DC1, ..., DC4).

10. Système onduleur selon l'une des revendications 8 ou 9,
***caractérisé en ce qu'***au moins un convertisseur de tension continue (B1, ..., B4) est conçu comme un convertisseur continu-continu bidirectionnel.

11. Système onduleur selon l'une des revendications 8 à 10,
***caractérisé en ce que*** les convertisseurs de tension continue (B1, ..., B4) présentent le même dimensionnement et la même conception en termes de plage de tension, d'intensité de courant maximale admissible et/ou de puissance maximale admissible.

12. Système onduleur selon l'une des revendications 8 à 10,
***caractérisé en ce que*** les convertisseurs de tension continue (B1, ..., B4) sont dimensionnés et conçus pour différentes plages de tension, différentes intensités de courant maximales admissibles et/ou différentes puissances maximales admissibles.

13. Système onduleur selon l'une des revendications 8 à 12,
***caractérisé en ce que*** l'unité de commutation (SE) présente au moins un réseau de commutation permettant de connecter les unités de tension continue (PV1, PV2, BAT, EC, GE, VB) raccordées aux entrées CC (DC1, ..., DC4) et un composant de commande qui, en plus de déterminer la valeur actuelle de l'au moins une grandeur de puissance des unités de tension continue (PV1, PV2, BAT, EC, GE, VB) respectivement raccordées aux entrées (E1, ..., E6) et de comparer la valeur respectivement déterminée de l'au moins une grandeur de puissance à au moins une valeur seuil, est également conçu pour évaluer le résultat de comparaison respectif et commander le réseau de commutation en conséquence.

14. Système onduleur selon la revendication 13, ***caractérisé en ce que*** le composant de commande est intégré dans une unité de commande du système onduleur (INV).
